(19) 

**Europäisches Patentamt**
**European Patent Office**
**Office européen des brevets**

(11) **EP 4 439 532 A1**

(12) **EUROPEAN PATENT APPLICATION**

(43) Date of publication:
**02.10.2024 Bulletin 2024/40**

(51) International Patent Classification (IPC):
**G09C 1/00** $^{(2006.01)}$      **H04L 9/00** $^{(2022.01)}$
**H04L 9/06** $^{(2006.01)}$

(21) Application number: **23213568.1**

(22) Date of filing: **01.12.2023**

(52) Cooperative Patent Classification (CPC):
**H04L 9/004; G09C 1/00; H04L 9/0631;**
H04L 2209/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.03.2023 US 202318194270**

(71) Applicant: **INTEL Corporation**
**Santa Clara, CA 95054 (US)**

(72) Inventors:
• **Kumar, Raghavan**
  **Hillsboro OR, 97124 (US)**
• **Mathew, Sanu K.**
  **Portland OR, 97229 (US)**
• **Varna, Avinash L.**
  **Chandler AZ, 85225 (US)**
• **Yap, Kirk S.**
  **Westborough MA, 01581 (US)**

(74) Representative: **Samson & Partner Patentanwälte**
**mbB**
**Widenmayerstraße 6**
**80538 München (DE)**

(54) **ERROR DETECTION IN CRYPTOGRAPHIC SUBSTITUTION BOX OPERATIONS**

(57) An apparatus of an aspect includes a substitution box (S-box) circuitry. The S-box circuitry includes multiplicative inverse circuitry. The multiplicative inverse circuitry is to receive an 8-bit input in Galois field and is to generate a corresponding 8-bit output in Galois field. The 8-bit output is to be a multiplicative inverse of the 8-bit input as long as there has been no error in the generation of the 8-bit output. The apparatus also includes error detection circuitry to receive the 8-bit input and that is coupled with the S-box circuitry to receive the 8-bit output. The error detection circuitry to detect whether an error has occurred in the generation of the 8-bit output based at least in part on whether the 8-bit output is the multiplicative inverse of the 8-bit input. Other apparatus, methods, and systems are also disclosed.

**FIG. 1**

**EP 4 439 532 A1**

**Description**

BACKGROUND

Technical Field

Embodiments described herein generally relate to cryptography. In particular, embodiments described herein generally relate to error detection in cryptography.

Background Information

Cryptology is a technology used to protect data (e.g., desired to be kept secret or confidential) in computer systems and other electronic devices. Cryptology generally involves using a cryptographic algorithm and a cryptographic key to protect the data. For example, encryption (sometimes referred to as cipher) performs a series of operations or transformations according to the cryptographic algorithm on input data or plaintext using an encryption key to generate an output encrypted data or ciphertext that is generally unintelligible. Likewise, decryption (sometimes referred to as inverse cipher) performs a series of operations or transformations according to the cryptographic algorithm on input encrypted data or ciphertext using a decryption key to generate output decrypted data or plaintext.

One known cryptographic algorithm is the Advanced Encryption Standard (AES), published by the National Institute of Standards and Technology (NIST) as Federal Information Processing Standard (FIPS) 197. AES is sometimes referred to as the Rijndael algorithm. AES is a block cipher algorithm that uses a fixed block size of 128-bits, a secret key algorithm that uses a secret key that should be kept secret, and a symmetric-key algorithm that uses the same key for both encryption and decryption. The fixed block size of 128-bits of data is referred to as state and is arranged as a 4x4 array of sixteen bytes. The AES algorithm may be used to encrypt 128-bits of state, or decrypt 128-bits of state, in either 10, 12, or 14 consecutive rounds, depending on whether the key size is 128-bits, 192-bits, or 256-bits for AES-128, AES-192 and AES-256, respectively.

In AES and other secret key ciphers, the secret key should be kept secret or confidential. If an attacker does not know the secret key, the properties of the cryptographic algorithm generally make it not possible, not practically feasible, or at least extremely difficult, to regenerate the unencrypted data or plaintext from the encrypted data or ciphertext. However, if the attacker can know or determine the secret key, then the unencrypted data can be readily regenerated from the encrypted data.

BRIEF DESCRIPTION OF THE DRAWINGS

The invention may best be understood by referring to the following description and accompanying drawings that are used to illustrate embodiments. In the drawings:

**FIG. 1** is a block diagram of an example of an AES unit and corresponding error detection circuitry.

**FIG. 2** is a circuit diagram of a detailed example embodiment of S-box circuitry.

**FIG. 3** is a block diagram of S-box circuitry and a first embodiment of error detection circuitry.

**FIG. 4** is a block diagram of S-box circuitry and a second embodiment of error detection circuitry.

**FIG. 5** is a block diagram of S-box circuitry and a third embodiment of error detection circuitry.

**FIG. 6** is a block diagram illustrating sixteen S-box portions, each having a corresponding error detection circuitry, and combination circuitry to combine sixteen error signals output from the sixteen error detection circuitry into a combined error signal.

**FIG. 7** is a block diagram of post-multiplicative inverse AES circuitry and corresponding error detection circuitry.

**FIG. 8** is a block diagram of an embodiment of error detection circuitry having more time slack than AES data path circuitry.

**FIG. 9** is a block diagram of a system in which an AES cryptographic unit is used to provide memory encryption.

**FIG. 10** is a block diagram of a processor having an AES cryptographic unit to encrypt and decrypt data.

**FIG. 11** is a block diagram of a processor having an S-box unit to encrypt and decrypt data.

**FIG. 12** illustrates an example computing system.

**FIG. 13** illustrates a block diagram of an example processor and/or System on a Chip (SoC) that may have one or more cores and an integrated memory controller.

**FIG. 14(A)** is a block diagram illustrating both an example in-order pipeline and an example register renaming, out-of-order issue/execution pipeline according to examples.

**FIG. 14(B)** is a block diagram illustrating both an example in-order architecture core and an example register renaming, out-of-order issue/execution architecture core to be included in a processor according to examples.

**FIG. 15** illustrates examples of execution unit(s) circuitry.

**FIG. 16** is a block diagram of a register architecture according to some examples.

**FIG. 17** illustrates examples of an instruction format.

**FIG. 18** illustrates examples of an addressing information field.

**FIG. 19** illustrates examples of a first prefix.

**FIGS. 20(A)-(D)** illustrate examples of how the R, X, and B fields of the first prefix in **FIG. 19** are used.

**FIGS. 21(A)-(B)** illustrate examples of a second prefix.

**FIG. 22** illustrates examples of a third prefix.

**FIG. 23** is a block diagram illustrating the use of a software instruction converter to convert binary instructions in a source instruction set architecture to binary instructions in a target instruction set architecture according to examples.

DETAILED DESCRIPTION OF EMBODIMENTS

One challenge is that AES hardware units and certain other cryptographic hardware units can be targeted by attackers seeking to obtain secret information (e.g., secret keys). One technique the attackers may use is fault-injection, such as voltage glitching, clock glitching or laser/electromagnetic pulse injection. In such techniques, errors may be caused or induced to occur within the circuitry of the AES or other cryptographic hardware units. For example, in voltage glitching attacks the voltage is reduced until the circuitry fails causing an error. Such errors may lead to corrupted or faulty ciphertext/encrypted data that may be analyzed to discover the secret key. For example, the faulty ciphertext/encrypted data may reduce the sample space of the secret key space, thereby decreasing the security of the underlying cryptographic algorithm, and differential fault cryptanalysis may be employed to extract the secret key. Conventionally, the AES or other cryptographic hardware units may not be able to detect such errors or may not be able to detect errors occurring in certain portions of the AES hardware units (e.g., the substitution box (S-box) circuitry).

Disclosed herein are methods, apparatus, and circuits to detect errors within AES and other cryptographic units (e.g., S-box circuitry). Advantageously, these methods, apparatus, and circuits may be used to detect and protect against fault-injection attacks (e.g., voltage glitching attacks) during runtime. In the following description, numerous specific details are set forth (e.g., specific circuits, microarchitectural details, sequences of operations, processor configurations, etc.). However, embodiments may be practiced without these specific details. In other instances, well-known circuits, structures, and techniques have not been shown in detail to avoid obscuring the understanding of the description.

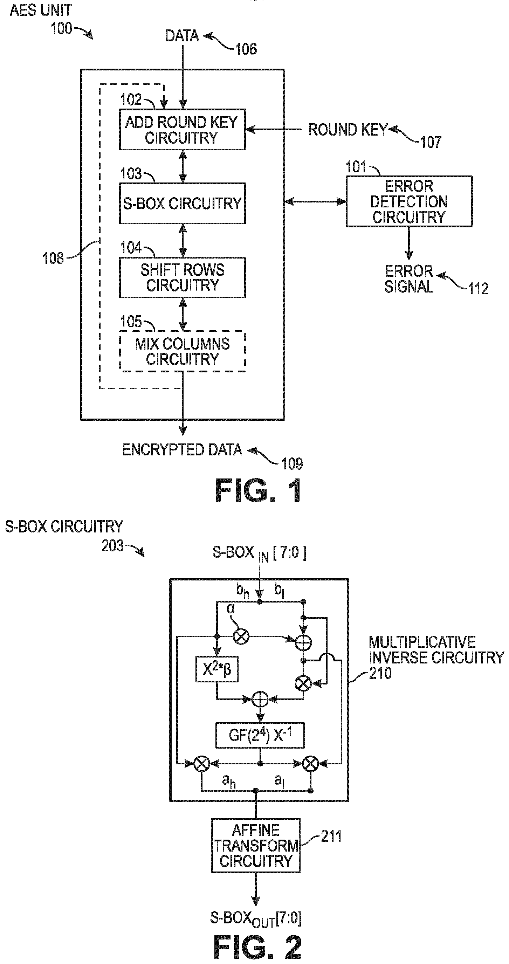

**FIG. 1** is a block diagram of an example of an AES unit 100 and corresponding error detection circuitry 101. The AES unit includes an add round key circuitry 102, an S-box circuitry 103, a shift rows circuitry 104 and a mix columns circuitry 105. Data 106 (e.g., unencrypted data for a first round or partially encrypted data for an intermediate round) may be provided or input to the add round key circuitry. A round key 107 (a key derived from the cipher key for the round) may also be provided as input to the add round key circuitry. The add round key circuitry may add or otherwise combine the input data with the input round key. For example, each byte of the input data may be combined with a byte of the round key using a bitwise Exclusive OR (XOR) operation to produce a 128-bit intermediate value.

The S-box circuitry 103 may receive the 128-bit intermediate value from the add round key circuitry. As will be explained further below, the S-box circuitry may have sixteen 8-bit slices or portions to process the 128-bit intermediate value. The S-box circuitry may perform a non-linear byte substitution operation on the 128-bit intermediate value in which each byte of the 128-bit intermediate value is substituted with another byte value (e.g., at least conceptually corresponding to a lookup table). The S-box circuitry may be based on a multiplicative inverse over Galois Field GF($2^8$), which provides non-linearity. To avoid attacks based on simple algebraic properties, the S-box may be constructed by combining the multiplicative inverse function with an invertible affine transformation.

The shift rows circuitry 104 may receive the output of the S-box circuitry. The shift rows circuitry may perform a bit-linear transposition operation in which bytes from the last three rows of the output of the S-box circuitry are shifted cyclically to the left a certain number of offsets.

The mix columns circuitry 105 may receive the output of the shift rows circuitry. The mix columns circuitry may perform a bit-linear transform or mixing operation on the columns of the output of the shift rows circuitry. This may mix or combine the four bytes in each column (e.g., independently of one another) to produce new columns. For example, each column of the 4x4 array or state may be treated as a polynomial over GF($2^8$) and may then be multiplied modulo $x^4+1$ with a fixed polynomial $c(x)=3x^3+x^2+x+2$. The mix columns circuitry is denoted in dashed lines to indicate that the mix columns circuitry is used for all rounds of AES except for the last round.

In some embodiments, the AES unit may output encrypted data 109 for the described single round (e.g., store the encrypted data in a register of a processor). In other embodiments, as shown the output of the mix columns circuitry may optionally be returned as an input to the add round key circuitry along a dashed arrow 108 for performance of another round (e.g., until the encrypted data 109 is output after 10, 12, or 14 rounds).

In some embodiments, the error detection circuitry 101 may detect an error in the AES unit or any portion thereof. In some embodiments, the error detection circuitry may detect an error in only the S-box circuitry. The error detection circuitry may output an error signal 112 indicative of whether an error has been detected.

To illustrate certain concepts, the AES unit has been described in the context of AES encryption. However, it is to be appreciated that either the same or a different AES unit may be used for decryption. The circuitry and operations used for decryption are substantially the reverse of the operations used for encryption.

FIG. 2 is a circuit diagram of a detailed example embodiment of S-box circuitry 203. The S-box circuitry is used to process one 8-bit byte of input data in finite field or Galois field labeled as S-box$_{in}$ [7:0]. The 8-bit byte S-box$_{in}$ [7:0] is apportioned into an input most significant or "high" 4-bit nibble ($b_h$) and an input least significant or "low" 4-bit nibble (bl). The S-box circuitry includes multiplicative inverse circuitry 210 to compute a multiplicative inverse in GF($2^8$). Efficient implementations of the multiplicative inverse circuitry involve computations using a composite-field of GF($2^4)^2$ which involves four multipliers shown as encircled "X," two adders (e.g., logic exclusive OR (XOR) circuits) shown as encircled "+," an $X^2*\beta$ unit, and a GF($2^4)X^{-1}$ unit. These circuit elements are all coupled as shown in the illustration. The multiplicative inverse circuitry may generate and output a multiplicative inverse to an affine transform circuitry 211. This may be provided as a multiplicative inverse output most significant or "high" 4-bit nibble ($a_h$) and a multiplicative inverse output least significant or "low" 4-bit nibble (ai). The two multiplicative inverse output 4-bit nibbles ($a_h$, ai) may be provided to the affine transform circuitry. The affine transform may output one 8-bit byte of output data in finite field or Galois field labeled as S-box$_{out}$ [7:0]. It is to be appreciated that this is just one illustrative example of suitable S-box circuitry. Various other S-box circuitry known in the arts may also optionally be used. The $X*\alpha$, $X^2*\beta$ modules compute intermediate terms that are required for the computation of $X^{-1}$ in GF($2^4)^2$, where $\alpha$ and $\beta$ are coefficients of the extension field polynomial of the form $x^2 + ax + \beta$. Other composite-field representations such as GF$((2^2)^2)^2$ are also valid formulations for computing $X^{-1}$ in GF($2^8$) and may result in a different circuit for the realization of the S-box module.

S-box circuitry is one place where errors may be induced (e.g., by a voltage glitching or other fault injection attack) or otherwise occur. Moreover, since the S-box operation tends to be a relatively high compute-intensive operation in AES, the S-box circuity may correspondingly represent a significant fraction of the overall circuitry used for a round of AES and more circuitry in which errors can occur. Further, the S-box operation of AES is non-linear and the integrity of the S-box circuitry is not easily protected using parity-based approaches that are useful for protecting the integrity of the circuitry for the linear operations in AES. Specifically, the non-linear nature of the S-box operation tends to hinder the expression of expected parity bits as a function of the input to the S-box operation. Therefore, new approaches to detect errors in the S-box circuitry would be useful and may offer certain advantages.

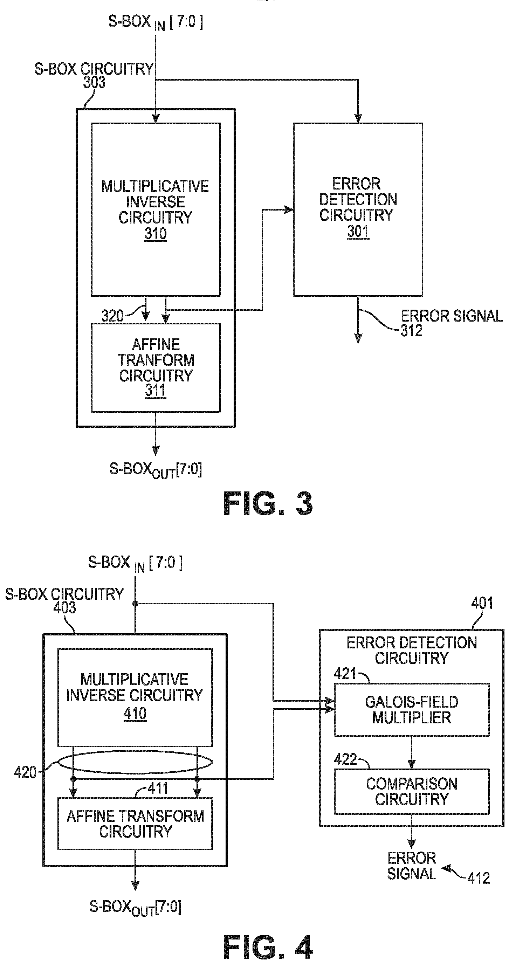

FIG. 3 is a block diagram of S-box circuitry 303 and a first embodiment of error detection circuitry 301. The S-box circuitry is used to process one 8-bit byte of input data in finite field or Galois field labeled as S-box$_{in}$ [7:0]. The S-box circuitry includes multiplicative inverse circuitry 310. In some embodiments, the multiplicative inverse circuitry may optionally be the same as or like the multiplicative inverse circuitry shown and described for FIG. 2. Alternatively, other types of multiplicative inverse circuitry known in the arts may optionally be used. The multiplicative inverse circuitry may output a multiplicative inverse output 320. The S-box circuitry also includes an affine transform circuitry 311. The affine transform may receive the multiplicative inverse output and generate and output one 8-bit byte of output data in finite field or Galois field labeled as S-box$_{out}$ [7:0].

The error detection circuitry 301 is coupled with the S-box circuitry 303. The error detection circuitry may detect errors in the multiplicative inverse circuitry 310 and/or the S-box operations used to compute a multiplicative inverse 320. These errors may be detected in real time operation and/or during runtime. The error detection circuitry may be coupled to receive the 8-bit byte of input data S-box$_{in}$ [7:0]. The S-box$_{in}$ [7:0] may represent an input (X) to the S-box operation. The error detection circuitry may also be coupled to receive the 8-bit multiplicative inverse output 320 ($X^{-1}$) output from the multiplicative inverse circuitry.

Now, a property of the S-box operation is known as the multiplicative inverse property. Part of the S-box operation is to map the input (X) to the S-box operation to its multiplicative inverse in the Galois field or finite field. The multiplicative inverse for X is $X^{-1}$ which is the number which when multiplied by X yields the multiplicative identity or one (i.e., 1). Accordingly, when there has been no error in the generation of the multiplicative inverse, the S-box operation satisfies the multiplicative inverse property in which the generated multiplicative inverse ($X^{-1}$) is a true multiplicative inverse of the input (X) and the product of the input (X) to the S-box operation and the inverse output ($X^{-1}$) output from the multiplicative inverse portion of the S-box operation has the value of one (e.g., the 8-bit binary value 00000001), for any input (X) other than zero. That is, ($X*X^{-1}$) = 1, for any input (X) other than zero. However, this multiplicative inverse property only holds true when there is no error in the S-box circuitry and/or the S-box operations used to compute the multiplicative inverse output 320 ($X^{-1}$). If one or more errors are induced (e.g., by a voltage glitching or other fault injection attack) or otherwise occur in the S-box circuitry and/or the S-box operations used to compute the inverse, then there is a high probability that the multiplicative inverse property will not hold true or be maintained.

In some embodiments, the error detection circuitry 301 may be operative to use the multiplicative inverse property as a basis for detecting errors in the multiplicative inverse circuitry 310 and/or the S-box operations used to compute the multiplicative inverse 320. In some embodiments, the error detection circuitry may be operative to detect whether an error has occurred in the multiplicative inverse circuitry 310 and/or in the generation of the multiplicative inverse 320 based at least in part on whether the multiplicative inverse 320 is (e.g., has attributes or characteristics of) the multiplicative inverse of the input S-boxin [7:0]. This may be done in various ways. For one thing, the error detection circuitry may implement the check for the multiplicative inverse property using any of various equations or relations derived from, or mathematically rearranged from, the multiplicative inverse property. For another thing, the error detection circuitry may implement the check for the multiplicative inverse property using an attribute, consequence, or property resulting from the multiplicative inverse property (e.g., the XOR of most and least significant nibbles being 0001 as will be discussed further below). Accordingly, the check may be based on the multiplicative inverse property in various ways as will be apparent to those skilled in the art and having the benefit of the present disclosure and its several different examples embodiments. The error detection may be operative to output an error signal indicative of whether an error has been detected.

FIG. 4 is a block diagram of S-box circuitry 403 and a second embodiment of error detection circuitry 401. The S-box circuitry is to process one 8-bit byte of input data in finite field or Galois field labeled as S-box$_{in}$ [7:0]. The S-box circuitry includes multiplicative inverse circuitry 410. In some embodiments, the multiplicative inverse circuitry may optionally be the same as or like the multiplicative inverse circuitry shown and described for FIG. 2. Alternatively, other types of multiplicative inverse circuitry known in the arts may optionally be used. The multiplicative inverse circuitry may output a multiplicative inverse output 420. The S-box circuitry also includes an affine transform circuitry 411. The affine transform may receive the multiplicative inverse output and generate and output one 8-bit byte of output data in finite field or Galois field labeled as S-box$_{out}$ [7:0].

The error detection circuitry 401 is coupled with the S-box circuitry 403. The error detection circuitry may detect errors in the multiplicative inverse circuitry 410 and/or the S-box operations used to compute a multiplicative inverse. These errors may be detected in real time operation and/or during runtime. The error detection circuitry may be coupled to receive the one 8-bit byte of input (X) labeled as S-box$_{in}$ [7:0]. The error detection circuitry may also be coupled to receive the multiplicative inverse output 420 ($X^{-1}$) from the multiplicative inverse circuitry.

AES operations are defined in a finite-field or Galois field of $GF(2^8)$. In some embodiments, the error detection circuitry may include a finite-field or Galois-field multiplier 421 to calculate or generate the product of the 8-bit input (X) to the S-box operation and an 8-bit multiplicative inverse output 420 ($X^{-1}$) from the multiplicative inverse circuitry 410. In some embodiments, the Galois-field multiplier 421 may be a one-term 8-bit Galois field multiplier.

In other embodiments, a composite-field implementation of AES may convert the 8-bit operations to a pair of 4-bit operations. In such embodiments, the Galois-field multiplier 420 may be a composite-field two-term 4-bit Galois-field multiplier to calculate the product of the input, X ($b_h, b_1$), to the S-box operation and the multiplicative inverse output, $X^{-1}$ ($a_h, a_1$), from the multiplicative inverse circuitry. In this expression, the $b_h$ and bi respectively represent the most significant and least significant 4-bit nibbles of the input (X) to the S-box operation, and the $a_h$ and ai respectively represent the most significant and least significant 4-bit nibbles of the multiplicative inverse output ($X^{-1}$) from the multiplicative inverse circuitry.

In still other embodiments, a composite-field implementations of AES may convert the 8-bit operations to a quadruple of 2-bit operations. In such embodiments, the Galois-field multiplier 421 may be a composite-field four-term 2-bit Galois-field multiplier to calculate the product of the input, X ($b_3, b_2, b_1, b_0$), to the S-box operation and the inverse output, $X^{-1}$ ($a_3, a_2, a_1, a_0$), from the multiplicative inverse circuitry. In this expression, the $b_3$, $b_2$, $b_1$, and $b_0$ respectively represent the consecutive 2-bit values of the input (X) to the S-box operation, and the as, $a_2$, ai, $a_0$ respectively represent the consecutive 2-bit values of the multiplicative inverse output ($X^{-1}$) from the multiplicative inverse circuitry.

As mentioned above, the multiplicative inverse property only holds true for any input (X) other than zero. If desired, a zero-value checker circuitry (not shown) may optionally be included in the error detection circuitry to check for corner-case conditions of when the input to the S-box is zero. For example, in the 4-bit embodiment, the zero-value checker circuitry may check whether ($8a_h + a_l$ == 0 and ai == 0) to catch output errors when input nibbles $b_h$, bi are 0.

Referring again to **FIG. 4,** the error detection circuitry 401 may also include a comparison circuitry 422. The comparison circuitry may compare the product ($X*X^{-1}$) with an expected value to determine whether the multiplicative inverse property has been maintained and/or whether or not an error has occurred. For example, the comparison circuitry may compare the product with a value of one (e.g., the 8-bit binary value 00000001). The comparison circuitry may determine that no error has occurred if the product matches the value of one (e.g., 00000001) or determine that an error has occurred in the generation of the product when the product does not equal one (e.g., the calculated product is 00000000, 00000010, 00100000, or any other value besides 00000001). The error detection circuitry may output an error signal 412 indicative of whether the multiplicative inverse property has been maintained (e.g., no error has been detected) or not (e.g., an error has been detected). By way of example, the error signal may represent a single bit or a signal on a single wire having a first value (e.g., being cleared to binary zero or set low) to indicate that the multiplicative inverse property has been maintained (e.g., no error has been detected) or having a second value (e.g., being set to binary one or set high) to indicate that the multiplicative inverse property has not been maintained (e.g., an error has been detected). The opposite convention is also possible.

Without limitation, in some embodiments, a protective action may optionally be taken based at least in part on the error signal indicating that an error has been detected. In some embodiments, this may be based on a single error being indicated, or a plurality or threshold level of errors being indicated within a certain period. The protection action may involve generating a machine check exception, writing a benign number (e.g., a random number, all zeroes or some other fixed number) into the output, or disabling the AES unit. This in turn may help to avoid revealing secrets (e.g., a secret key) in the event of a fault-injection attack.

Now, as discussed above, the check using the multiplicative inverse property may be implemented in different ways in different embodiments. For example, the error detection circuitry may implement the check for the multiplicative inverse property using an attribute, consequence, or property resulting from the multiplicative inverse property. To further illustrate, consider the following embodiments.

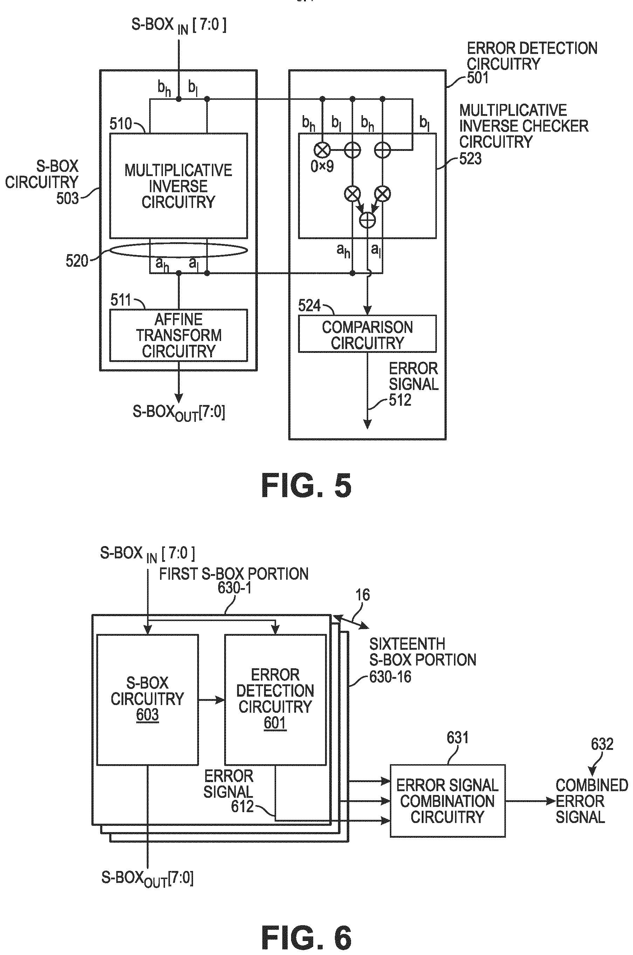

**FIG. 5** is a block diagram of S-box circuitry 503 and a third embodiment of error detection circuitry 501. The S-box circuitry is used to process one 8-bit byte of input data in Galois field labeled as S-box$_{in}$ [7:0]. The S-box circuitry includes multiplicative inverse circuitry 510. In some embodiments, the multiplicative inverse circuitry may optionally be the same as or like the multiplicative inverse circuitry shown and described for **FIG. 2.** Alternatively, other types of multiplicative inverse circuitry known in the arts may optionally be used. The S-box circuitry also includes an affine transform circuitry 511. The affine transform may output one 8-bit byte of output data in Galois field labeled as S-box$_{out}$ [7:0].

The error detection circuitry 501 is coupled with the S-box circuitry 503. The error detection circuitry may detect errors in the multiplicative inverse circuitry 510 and/or the S-box operations used to compute a multiplicative inverse 520. These errors may be detected in real time operation and/or during runtime. The error detection circuitry may be coupled to receive the most significant 4-bit nibble ($b_h$) and the least significant 4-bit nibble (bi) of the input (X) to the S-box operation. The error detection circuitry may also be coupled to receive the most significant 4-bit nibble ($a_h$) and the least significant 4-bit nibble (ai) of the multiplicative inverse output ($X^{-1}$) from the multiplicative inverse circuitry 510.

Recall that the multiplicative inverse property is the property that the product of an input (X) to the S-box operation and an inverse output ($X^{-1}$) output from the multiplicative inverse portion of the S-box operation has the value of one (e.g., the 8-bit binary value 00000001), for any input (X) other than zero. That is, $X*X^{-1} = 1$, for any input (X) other than zero. As an attribute, consequence, or property of this, if the product of an input (X) to the S-box operation and an inverse output ($X^{-1}$) from the S-box operation is one (e.g., the 8-bit binary value 00000001), then the most-significant nibble of the product should be zero (e.g., the 4-bit binary value 0000) and the least significant nibble should be one (e.g., the 4-bit binary value 0001). In some embodiments, this attribute, consequence, or property due to the multiplicative inverse property may serve as a basis for detecting errors. For example, in some embodiments, the error detection circuitry may generate an XOR, sum, or combination in the finite field of the most-significant nibble and the least significant nibble of the product of the input (X) to the S-box operation and an inverse output ($X^{-1}$) output from the multiplicative inverse portion of the S-box operation. Then, the error detection circuitry may compare the resulting value to the 4-bit value of one (e.g., the 4-bit binary value 0001) to determine whether an error has occurred in the S-box circuitry and/or the S-box operations used to generate the product.

Equations 1 below show that the XOR of the most significant nibble (msb) of the product and the least significant nibble (lsb) of the product may be expressed in terms of the four 4-bit nibbles $b_h$, $b_l$, $a_h$, and $a_l$. Specifically, the product $X*X^{-1}$ in the composite field may be expressed as a polynomial in terms of $a_h$, $a_l$, $b_h$, $b_l$, and x after multiplying and reducing as shown in the following equation:

$$X * X^{-1} = (a_l b_h + a_h b_l + a_h b_h)x + (a_l b_l + 8a_h b_h) \qquad \text{Equation 1}$$

In Equation 1, the leftmost term multiplying x represents the most significant nibble (msb) while the other rightmost term represents the least significant nibble (lsb). The above equation may be mathematically rearranged to express the XOR of the most significant nibble (msb) of the product and the least significant nibble (lsb) of the product in terms of $a_h$, $a_l$, $b_h$, bi as shown in the following Equation 2:

$$msb\ XOR\ lsb = a_h(b_l + 9b_h) + a_l(b_l + b_h) \qquad \text{Equation 2}$$

Equation 2 involves less multiplications which generally means less circuitry, since multiplication circuitry tends to be relatively large. In some embodiments, the above Equation 2 may be implemented in hardware as a test based on the multiplicative inverse property. As shown, the error detection circuitry includes multiplicative inverse checker circuitry 523 that includes three multipliers shown as encircled "X" and three adders (e.g., XOR circuits) shown as encircled "+". Advantageously, the multiplicative inverse checker circuitry may generally tend to reduce the cost, size, and power consumption as compared to the Galois field multiplier 421 of FIG. 4. For example, this embodiment eliminates the Galois field multipliers (e.g., the two $GF(2^4)^2$ multipliers computing the product $a_l*b_h$ from the checker data path.

As mentioned above, the multiplicative inverse property only holds true for any input (X) other than zero. If desired, a zero-value checker circuitry may optionally be included in the error detection circuitry to check for corner-case conditions of when the input to the S-box is zero. For example, in the 4-bit embodiment, the zero-value checker circuitry may check whether ($8a_h+a_l$ == 0 and $a_l$ == 0) to catch output errors when input nibbles $b_h$, $b_l$ are 0.

Referring again to **FIG. 5,** the error detection circuitry may also include a comparison circuitry 522. The comparison circuitry may compare the XOR or other combination of the nibbles with an expected value to determine whether or not the multiplicative inverse property has been maintained and/or whether or not an error has occurred in the generation of the multiplicative inverse. For example, the comparison circuitry may compare the XOR or other combination of the nibbles with a value of one (e.g., the 4-bit binary value 0001). The comparison circuitry may determine that no error has occurred if the XOR or other combination of the nibbles equals the value of one or determine that an error has occurred if it does not equal the value of one (e.g., it is 0000, 0010, 1000, or any other value besides 0001). The error detection circuitry may output an error signal 512 indicative of whether an error has been detected. The error signal may optionally be the same or like those previously described.

Without limitation, in some embodiments, a protective action may optionally be taken based at least in part on the error signal indicating that an error has been detected. This may optionally be the same or like what has been previously described.

**FIG. 6** is a block diagram illustrating sixteen S-box slices or portions 630-1 through 630-16, each having a corresponding S-box circuitry 603 and an error detection circuitry 601, and error signal combination circuitry 631 to combine sixteen error signals output from the sixteen error detection circuitry into a combined error signal 632. The S-box circuitry may be the same as or like S-box circuitry described elsewhere here or other types of S-box circuitry known in the arts may optionally be used. In some embodiments, the error detection circuitry may be the same as or like that of either **FIG. 3, FIG. 4,** or **FIG. 5.** Alternatively, other types of error detection circuitry to detect errors based on the multiplicative inverse property in some other way may optionally be used. The sixteen S-box portions may collectively process the sixteen bytes making up the 128-bit state of AES. The error signal combination circuitry 631, which may optionally be logical OR circuitry (e.g., an OR tree circuit) or other combination circuitry, may combine sixteen corresponding error signals generated for the sixteen bytes into the combined error signal which may be indicative of whether an error has been detected by any one or more of the sixteen S-box portions.

Advantageously, error detection circuitry may be included for the S-box circuitry without the need for a double redundant design in space or time. Another possible approach is to include a pair of duplicated AES units and to compare the two outputs of the pair of duplicated AES units to detect errors. However, such duplication of AES units tends to increase manufacturing cost, die size, and power consumption. Yet another possible approach is to repeat the same computation on the same AES unit twice and compare the two outputs to detect errors. However, this tends to decrease AES throughput and increase power consumption. Further, the approaches described do not rely on parity-based approaches to detect errors within the S-box circuitry and/or the S-box operations used to generate the inverse product.

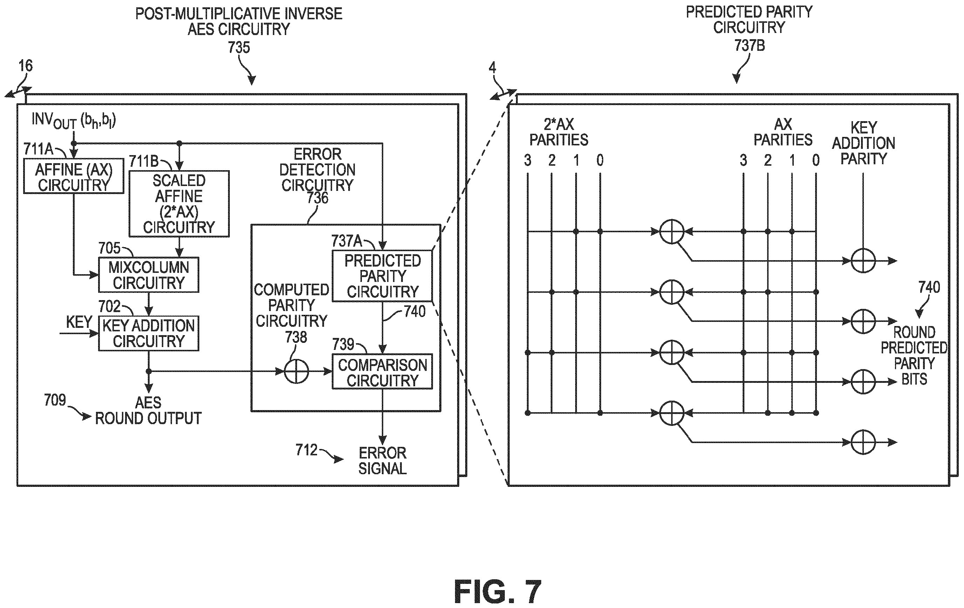

**FIG. 7** is a block diagram of post-multiplicative inverse AES circuitry 735 and corresponding error detection circuitry 736 to detect errors introduced in the post-multiplicative inverse AES circuitry. The post-multiplicative inverse AES circuitry may be coupled to receive high and low nibbles of a multiplicative inverse output, labeled as ($Inv_{out}$ ($b_h$,$b_l$), from multiplicative inverse circuitry of S-box circuitry (not shown). The post-multiplicative inverse AES circuitry includes affine transformation circuitry (AX) 711A, scaled affine transformation circuitry (2*AX) 711B, mix columns circuitry 705, and key addition circuitry 702. The affine transform circuitry 711A may compute an affine transform. The scaled affine transformation circuitry 711B may compute a scaled affine transformation that is scaled by 0x2. This is not required but may allow the scaling by 0x3 in the mix columns circuitry 705 to be achieved by a simple XOR or combination of the outputs from the affine transform circuitry and the scaled affine transform circuitry. The key addition circuitry 702 may add a round key for the round. An AES round output 709 may be output from the post-multiplicative inverse AES circuitry.

In some embodiments, the error detection circuitry 736 may use parity to detect errors in the post-multiplicative inverse AES operations. The error detection circuitry includes predicted parity circuitry 737A, computed parity circuitry 738, and comparison circuitry 739. A more detailed example embodiment of the predicted parity circuitry 737A is shown on the right-hand side of the illustration as predicted parity circuitry 737B. In some embodiments, a byte-level parity checking scheme may optionally be used. This may help to increase fault detection coverage but is not required. The error detection circuitry may compute the parities of the affine and scaled affine transformations as a function of the multiplicative inverse output (e.g., $Inv_{out}$ ($b_h$,$b_l$)). In some embodiments, the mix columns and key addition operations may be checked for errors using a single parity computation by expressing the expected parity of a rounds output as a function of the multiplicative inverse output (e.g., $Inv_{out}$ ($b_h$,$b_l$)). Such an approach may help to detect errors in the affine transformation operation but is not required. Such an approach may also help to reduce area overhead.

As illustrated for the predicted parity circuitry 737B, a first set of parities labeled as a first set of vertical lines 3, 2, 1, 0 may be computed for the affine transform (AX) circuitry 711A, and a second set of parities labeled as a second set of vertical lines 3, 2, 1, 0 may be computed for the scaled affine transform (2*AX) circuitry 711B. The mix columns parities may be computed by choosing or selecting, as shown by dark dots crossing the lines, a subset of these parities for the affine transform (AX) and scaled affine transform (2*AX). These may be XOR'd or otherwise combined as shown by a leftmost set of four vertical encircled "+" representing XOR circuitry. While upstream parity computations in the round are contained within a single byte, the mix column parity prediction may depend on the predicted affine and scaled affine parities of four adjacent bytes. The key expansion circuitry may generate a round key per clock cycle, along with the associated parity bits. The round key parity bits may then be XOR'd or otherwise combined with the mix columns parity bits to reflect the round-key addition as shown by a rightmost set of four vertical encircled "+" representing XOR circuitry to generate round predicted parity bits 740. The affine and scaled affine predicted parities may be combined with the round key parities to generate sixteen output byte-granularity parities for the AES round. The comparison circuitry 739 may compare the round predicted parity bits 740 from the predicted parity circuitry 737A against computed parity bits computed by the computed parity circuitry 738 for the actual AES data path. The comparison circuitry may output an error signal 712 indicative of any errors detected.

Now, it is to be appreciated that this is just one illustrative example embodiment of suitable error detection circuitry 736 for post-multiplicative inverse AES circuitry. In other embodiments, parity may only be computed for a subset of the affine transform, mix columns, and key addition operations. In general, any such parity may help to detect errors and is useful. There is a tradeoff of error detection capability and error detection circuitry complexity and different levels may be useful for different designs.

Voltage glitch or undervoltage attacks may attempt to induce timing errors or faults by degrading the supply voltage to intentionally violate maximum delay constraints or cause timing violations. One challenge is that these attacks may either induce errors in the actual AES circuitry or in the error detection circuitry. If these errors are induced first in the error detection circuitry, then an error may be signaled even though there is no error in the actual AES circuitry, which may represent a "false alarm" and be generally undesirable. In some embodiments, the error detection circuitry may be designed to have more timing slack and/or less tight timing constraints as compared to the actual AES circuitry. This may help to encourage or increase the likelihood that the actual AES circuitry with experience an error or fail before the error detection circuitry at low voltages (e.g., in the event of an undervoltage glitch). This may also help to improve the integrity of error signal generation by the error detection circuitry at such low voltages.

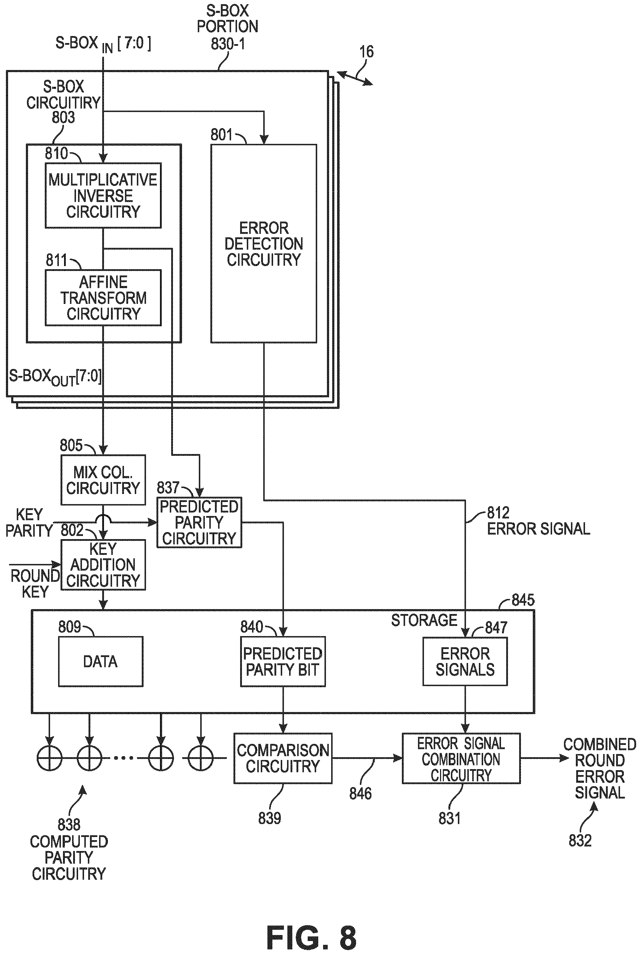

**FIG. 8** is a block diagram of an embodiment of error detection circuitry having more time slack than AES round circuitry. A first S-box portion 830-1 is shown in detail. The first S-box portion 830-1 includes S-box circuitry 803 including multiplicative inverse circuitry 810 and affine transform circuitry 811. The S-box circuitry may be the same as or similar to the S-box circuitry described elsewhere herein, or else other types of S-box circuitry known in the arts may optionally be used. The first S-box portion also includes error detection circuitry 801 coupled with the S-box circuitry 803. In some embodiments, the error detection circuitry may be the same as or similar to that of either **FIG. 3, FIG. 4, or FIG. 5.** Alternatively, other types of error detection circuitry to detect errors based on the multiplicative inverse property may optionally be used. The error detection circuitry 801 may output an error signal 812. There may be fifteen other S-box portions optionally analogous to the first S-box portion. Each of the other fifteen S-box portions may similarly output an error signal, which for simplicity of illustration are not shown. The fifteen additional error signals may be concurrently output from fifteen additional error detection circuitries similar to error detection circuitry 801 but each corresponding to a different one of fifteen additional 8-bit inputs to be input into the corresponding S-box portion. These error signals 847 may be stored in one or more registers or other storage 845.

Also shown are mix columns circuitry 805 and key addition circuitry 802 to add a round key. The key addition circuitry may output 128-bit round output data 809 for the round, which may be stored in the register(s) or other storage 845. Also shown is error detection circuitry including predicted parity circuitry 837, computed parity circuitry 838, comparison circuitry 839, and error signal combination circuitry 831. The predicted parity circuitry may optionally be the same as or similar to the predicted parity circuitry 737B of FIG. 7. The predicted parity circuitry may compute predicted parity bits 840 for one or more post-multiplicative inverse AES operations (e.g., affine transformation, mix columns, add round key, or any combination thereof). The predicted parity bits 840 may be stored in the register(s) or other storage 845.

The computed parity circuitry may receive the 128-bit round output data 809 from the register(s) or other storage 845 and may compute parity bits from the data. The computed parities may be computed at byte granularity such that there may be sixteen computed parity bits. The comparison circuitry 839 may receive the sixteen computed parity bits from the computed parity circuitry, may receive the sixteen predicted parity bits 840 from the register(s) or other storage 845, may compare the sixteen computed parity bits and the sixteen predicted parity bits, and may provide sixteen corresponding parity error signals 846 (e.g., sixteen 1-bit error signals) to the error signal combination circuitry 831. The error signal combination circuitry 831 may logically OR (e.g., using an OR tree) or otherwise combine the sixteen parity error signals 846 and the sixteen error signals 847 from the sixteen S-box portions to generate a combined round error signal 832 (e.g., a 1-bit error signal) per AES round of operation. In the case of error reporting being performed on multiple rounds, the combined round error signal 832 may subsequently be OR'd or otherwise combined with those for one or more or all subsequent rounds of AES.

Now, in some embodiments, the available timing slack for the error detection circuitry may be greater than the available timing slack for the AES round circuitry. In some embodiments, the error signal combination circuitry 831 may combine the sixteen parity error signals 846 and the sixteen error signals 847 to generate the combined round error signal 832 in a subsequent clock cycle to when the 128-bit round data 809 was generated. As shown in the illustrated embodiment, in some embodiments, in additional to this, the comparison circuitry 839 may compare the sixteen computed parity bits from the computed parity bit circuitry 838 and the sixteen predicted parity bits 840 in a subsequent clock cycle to when the 128-bit round data 809 was generated. As shown in the illustrated embodiment, in some embodiments, in additional to both of these, the computed parity circuitry 838 may receive the 128-bit round output data 809 from the register(s) or other storage 845 and may compute parity bits from the 128-bit round output data 809 in a subsequent clock cycle to when the 128-bit round data 809 was generated. In some embodiments, the AES round circuitry (e.g., the S-box circuitry, the mix-columns circuitry, the key addition circuitry, etc.) may have a greater latency from receipt of the 128-bit input data including S-boxin[7:0] to output of the 128-bit output data 809 than any latency of the error generation circuitry during the same clock cycle.

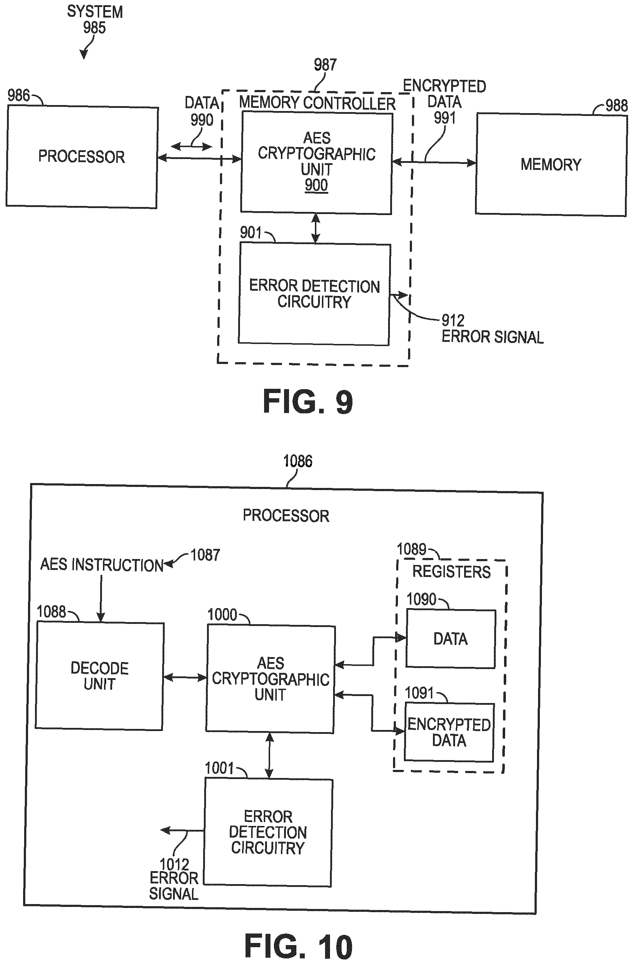

AES and other cryptographic units may be used in different ways and in different environments. **FIGs. 9-11** illustrate a few representative examples, although the scope of the invention is not so limited.

**FIG. 9** is a block diagram of a system 985 in which an AES cryptographic unit 900 is used to provide memory encryption. The system includes a processor 986, the AES cryptographic unit 900, and a memory 988. The AES cryptographic unit may optionally be included within or otherwise associated with a memory controller 987. The AES cryptographic unit may be used to encrypt unencrypted data 990 received from the processor and store corresponding encrypted data 991 in the memory. The AES cryptographic unit may also be used to decrypt the encrypted data 991 received from the memory and provide corresponding decrypted data 990 to the processor. A similar system is contemplated in which AES encryption unit is used to exchange encrypted data with an input/output device (not shown) instead of the memory. In some embodiments, the system may include error detection circuitry 901 (e.g., any of the error detection circuitry disclosed herein) associated with the AES cryptographic unit to detect an error (e.g., caused by a voltage glitching or other fault-injection attack) and provide an error signal 912 indicating the error.

**FIG. 10** is a block diagram of a processor 1086 having an AES cryptographic unit 1000 to encrypt and decrypt data. The processor may be a general-purpose processor (e.g., a central processing unit (CPU) core) or a special-purpose processor (e.g., a graphics processing unit (GPU), a cryptographic processor, a network processor, a communication processor, etc.). The processor includes a decode unit 1088 to decode an AES instruction 1087. The AES instruction may specify that one or more encryption or decryption rounds, or only a part of an encryption or decryption round (e.g., an S-box or inverse S-box operation) is to be performed. For example, the instruction may specify performance of any one of a single encryption round, a single decryption round, a single encryption last round, a single decryption last round, all operations of a single encryption round except a mix columns operation, only a mix columns operation, all operations of a single decryption round except an inverse mix columns operation, only an inverse mix columns operation, only a substitution box (S-box) operation, only an inverse S-box operation, either 10, 12, or 14 encryption rounds, or either 10, 12, or 14 decryption rounds, to name a few examples. The AES instruction may represent a macroinstruction, machine-code instruction, or other instruction of an instruction set of the processor.

The processor also includes the AES cryptographic unit 1000 to perform encryption or decryption operations as specified by the instruction. For encryption, the AES cryptographic unit may encrypt input unencrypted data 1090 to generate corresponding output encrypted data 1091. For decryption, the AES cryptographic unit may be used to decrypt input encrypted data 1091 to generate corresponding output decrypted data 1090. As shown, the unencrypted data and encrypted data may optionally be stored in registers 1089 of the processor. Alternatively, one or more of the unencrypted data and the encrypted data may optionally be stored in memory (not shown). In some embodiments, the system may include error detection circuitry 1001 (e.g., any of the error detection circuitry disclosed herein) associated with the AES cryptographic unit to detect an error (e.g., caused by a voltage glitching or other fault-injection attack) and provide an error signal 1012 indicating the error.

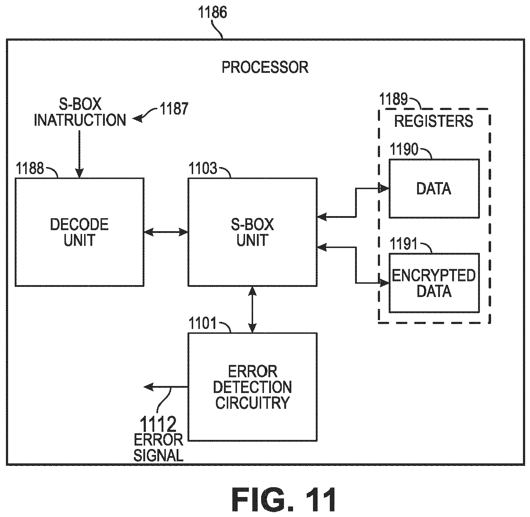

**FIG. 11** is a block diagram of a processor 1186 having an S-box unit 1103 to encrypt and decrypt data. The processor may be a general-purpose processor or special-purpose processor as mentioned above. The processor includes a decode unit 1188 to decode an S-box instruction 1187. The S-box instruction may specify that an S-box operation or an inverse S-box operation is to be performed. The S-box unit may perform the S-box or inverse S-box operation as specified by the instruction. For encryption, the S-box unit may be used to encrypt input unencrypted data 1190 to generate corresponding output encrypted data 1191 (e.g., encrypted by an S-box operation). For decryption, the S-box unit may be used to decrypt input encrypted data 1191 to generate corresponding output decrypted data 1190 (e.g., decrypted by an inverse S-box operation). The unencrypted data and encrypted data may optionally be stored in registers 1189 of the processor, or one or more of them may optionally be stored in memory (not shown). In some embodiments, the system may include error detection circuitry 1101 (e.g., the error detection circuitry of any of **FIGs. 3-6**) associated with the S-box unit to detect an error in the S-box unit (e.g., caused by a voltage glitching or other fault-injection attack) and provide an error signal 1112 indicating the error.

The scope of the invention is not limited to providing error detection capability for all the AES operations. In some embodiments, protection may only be provided for the S-box operation. The S-box operation commonly represents a significant fraction of the overall AES logic and providing error detection for the S-box operation is useful whether error detection is provided for other AES operations. In addition, as mentioned above, some instruction sets may include an S-box instruction and associated S-box unit as an execution unit and in such cases error detection may optionally be selectively applied to such an S-box unit without being applied to other AES circuitry.

While embodiments have been described herein the context of AES, the scope of the invention is not limited to just AES. Other existing or future cryptographic algorithms may have similar features that allow the approaches described herein to be used or adapted for these other cryptographic algorithms. For example, SMS4 is a cryptographic algorithm promoted by the Chinese government for use in wireless networks that also has an S-box with a multiplicative inverse property. Embodiments like those disclosed herein may be applied to SMS4 analogously to AES. Still other embodiments like those disclosed herein may be applied to the Camellia block cipher algorithm.

Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

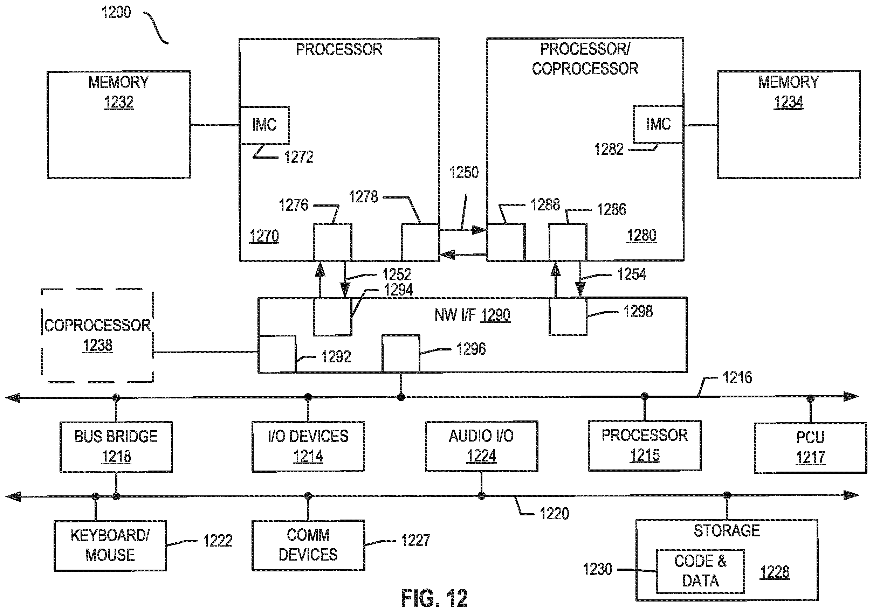

FIG. 12 illustrates an example computing system. Multiprocessor system 1200 is an interfaced system and includes a plurality of processors or cores including a first processor 1270 and a second processor 1280 coupled via an interface 1250 such as a point-to-point (P-P) interconnect, a fabric, and/or bus. In some examples, the first processor 1270 and the second processor 1280 are homogeneous. In some examples, first processor 1270 and the second processor 1280 are heterogenous. Though the example system 1200 is shown to have two processors, the system may have three or more processors, or may be a single processor system. In some examples, the computing system is a system on a chip (SoC).

Processors 1270 and 1280 are shown including integrated memory controller (IMC) circuitry 1272 and 1282, respectively. Processor 1270 also includes interface circuits 1276 and 1278; similarly, second processor 1280 includes interface circuits 1286 and 1288. Processors 1270, 1280 may exchange information via the interface 1250 using interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a network interface (NW I/F) 1290 via individual interfaces 1252, 1254 using interface circuits 1276, 1294, 1286, 1298. The network interface 1290 (e.g., one or more of an interconnect, bus, and/or fabric, and in some examples is a chipset) may optionally exchange information with a coprocessor 1238 via an interface circuit 1292. In some examples, the coprocessor 1238 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1270, 1280 or outside of both processors, yet connected with the processors via an interface such as P-P interconnect, such that either or both processors' local cache information may be stored in the shared cache if a processor is placed into a low power mode.

Network interface 1290 may be coupled to a first interface 1216 via interface circuit 1296. In some examples, first interface 1216 may be an interface such as a Peripheral Component Interconnect (PCI) interconnect, a PCI Express interconnect or another I/O interconnect. In some examples, first interface 1216 is coupled to a power control unit (PCU) 1217, which may include circuitry, software, and/or firmware to perform power management operations with regard to the processors 1270, 1280 and/or co-processor 1238. PCU 1217 provides control information to a voltage regulator (not shown) to cause the voltage regulator to generate the appropriate regulated voltage. PCU 1217 also provides control information to control the operating voltage generated. In various examples, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other examples, power management operations to be performed by PCU 1217 may be implemented externally to a processor, such as by way of a separate power management integrated circuit (PMIC) or another component external to the processor. In yet other examples, power management operations to be performed by PCU 1217 may be implemented within BIOS or other system software.

Various I/O devices 1214 may be coupled to first interface 1216, along with a bus bridge 1218 which couples first interface 1216 to a second interface 1220. In some examples, one or more additional processor(s) 1215, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1216. In some examples, second interface 1220 may be a low pin count (LPC) interface. Various devices may be coupled to second interface 1220 including, for example, a keyboard and/or mouse 1222, communication devices 1227 and storage circuitry 1228. Storage circuitry 1228 may be one or more non-transitory machine-readable storage media as described below, such as a disk drive or other mass storage device which may include instructions/code and data 1230 and may implement the storage 'ISAB03 in some examples. Further, an audio I/O 1224 may be coupled to second interface 1220. Note that other architectures than the point-to-point architecture described above are possible. For example, instead of the point-to-point architecture, a system such as multiprocessor system 1200 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the co-processor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

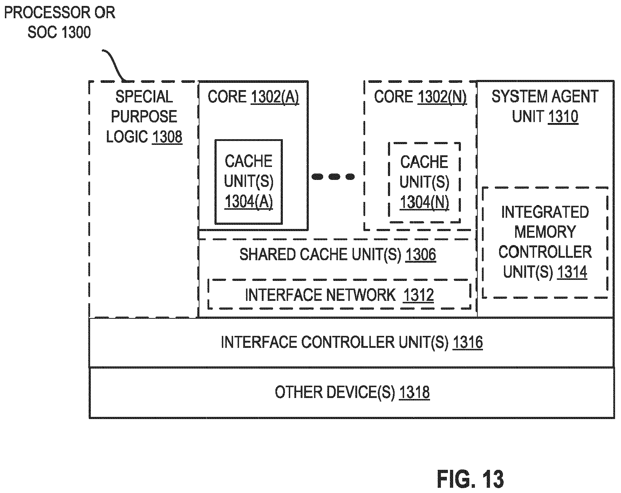

FIG. 13 illustrates a block diagram of an example processor and/or SoC 1300 that may have one or more cores and an integrated memory controller. The solid lined boxes illustrate a processor 1300 with a single core 1302(A), system agent unit circuitry 1310, and a set of one or more interface controller unit(s) circuitry 1316, while the optional addition of the dashed lined boxes illustrates an alternative processor 1300 with multiple cores 1302(A)-(N), a set of one or more integrated memory controller unit(s) circuitry 1314 in the system agent unit circuitry 1310, and special purpose logic 1308, as well as a set of one or more interface controller units circuitry 1316. Note that the processor 1300 may be one of the processors 1270 or 1280, or co-processor 1238 or 1215 of FIG. 12.

Thus, different implementations of the processor 1300 may include: 1) a CPU with the special purpose logic 1308 being integrated graphics and/or scientific (throughput) logic (which may include one or more cores, not shown), and the cores 1302(A)-(N) being one or more general purpose cores (e.g., general purpose in-order cores, general purpose out-of-order cores, or a combination of the two); 2) a coprocessor with the cores 1302(A)-(N) being a large number of special purpose cores intended primarily for graphics and/or scientific (throughput); and 3) a coprocessor with the cores 1302(A)-(N) being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1304(A)-(N) within the cores 1302(A)-(N), a set of one or more shared cache unit(s) circuitry 1306, and external memory (not shown) coupled to the set of integrated memory controller unit(s) circuitry 1314. The set of one or more shared cache unit(s) circuitry 1306 may include one or more mid-level caches, such as level 2 (L2), level 3 (L3), level 4 (L4), or other levels of cache, such as a last level cache (LLC), and/or combinations thereof. While in some examples interface network circuitry 1312 (e.g., a ring interconnect) interfaces the special purpose logic 1308 (e.g., integrated graphics logic), the set of shared cache unit(s) circuitry 1306, and the system agent unit circuitry 1310, alternative examples use any number of well-known techniques for interfacing such units. In some examples, coherency is maintained between one or more of the shared cache unit(s) circuitry 1306 and cores 1302(A)-(N). In some examples, interface controller units circuitry 1316 couple the cores 1302 to one or more other devices 1318 such as one or more I/O devices, storage, one or more communication devices (e.g., wireless networking, wired networking, etc.), etc.

In some examples, one or more of the cores 1302(A)-(N) are capable of multi-threading. The system agent unit circuitry 1310 includes those components coordinating and operating cores 1302(A)-(N). The system agent unit circuitry 1310 may include, for example, power control unit (PCU) circuitry and/or display unit circuitry (not shown). The PCU may be or may include logic and components needed for regulating the power state of the cores 1302(A)-(N) and/or the special purpose logic 1308 (e.g., integrated graphics logic). The display unit circuitry is for driving one or more externally connected displays.

The cores 1302(A)-(N) may be homogenous in terms of instruction set architecture (ISA). Alternatively, the cores 1302(A)-(N) may be heterogeneous in terms of ISA; that is, a subset of the cores 1302(A)-(N) may be capable of executing an ISA, while other cores may be capable of executing only a subset of that ISA or another ISA.

Example Core Architectures - In-order and out-of-order core block diagram.

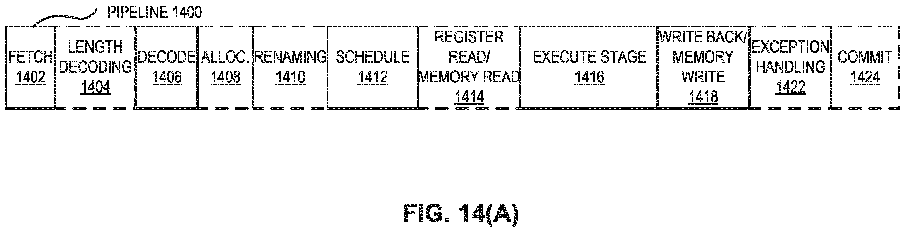

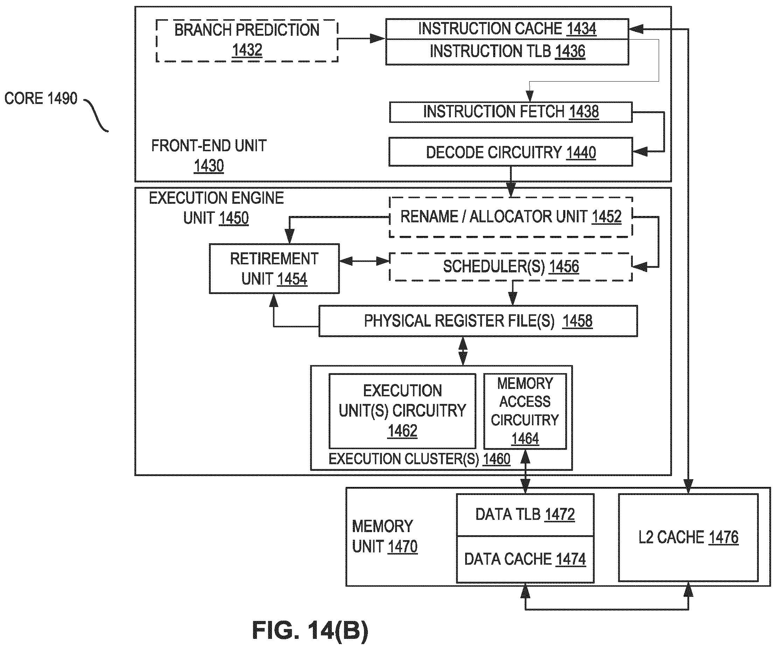

FIG. 14(A) is a block diagram illustrating both an example in-order pipeline and an example register renaming, out-of-order issue/execution pipeline according to examples. FIG. 14(B) is a block diagram illustrating both an example in-order architecture core and an example register renaming, out-of-order issue/execution architecture core to be included in a processor according to examples. The solid lined boxes in FIGS. 14(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 14(A), a processor pipeline 1400 includes a fetch stage 1402, an optional length decoding stage 1404, a decode stage 1406, an optional allocation (Alloc) stage 1408, an optional renaming stage 1410, a schedule (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, and during the decode stage 1406, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1406 and the register read/memory read stage 1414 may be combined into one pipeline stage. In one example, during the execute stage 1416, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 14(B) may implement the pipeline 1400 as follows: 1) the instruction fetch circuitry 1438 performs the fetch and length decoding stages 1402 and 1404; 2) the decode circuitry 1440 performs the decode stage 1406; 3) the rename/allocator unit circuitry 1452 performs the allocation stage 1408 and renaming stage 1410; 4) the scheduler(s) circuitry 1456 performs the schedule stage 1412; 5) the physical register file(s) circuitry 1458 and the memory unit circuitry 1470 perform the register read/memory read stage 1414; the execution cluster(s) 1460 perform the execute stage 1416; 6) the memory unit circuitry 1470 and the physical register file(s) circuitry 1458 perform the write back/memory write stage 1418; 7) various circuitry may be involved in the exception handling stage 1422; and 8) the retirement unit circuitry 1454 and the physical register file(s) circuitry 1458 perform the commit stage 1424.

FIG. 14(B) shows a processor core 1490 including front-end unit circuitry 1430 coupled to execution engine unit circuitry 1450, and both are coupled to memory unit circuitry 1470. The core 1490 may be a reduced instruction set architecture computing (RISC) core, a complex instruction set architecture computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front-end unit circuitry 1430 may include branch prediction circuitry 1432 coupled to instruction cache circuitry 1434, which is coupled to an instruction translation lookaside buffer (TLB) 1436, which is coupled to instruction fetch circuitry 1438, which is coupled to decode circuitry 1440. In one example, the instruction cache circuitry 1434 is included in the memory unit circuitry 1470 rather than the front-end circuitry 1430. The decode circuitry 1440 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1440 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1440 may be implemented using various different mechanisms. Examples of suitable mechanisms include, but are not limited to, look-up tables, hardware implementations, programmable logic arrays (PLAs), microcode read only memories (ROMs), etc. In one example, the core 1490 includes a microcode ROM (not shown) or other medium that stores microcode for certain macro instructions (e.g., in decode circuitry 1440 or otherwise within the front-end circuitry 1430). In one example, the decode circuitry 1440 includes a micro-operation (micro-op) or operation cache (not shown) to hold/cache decoded operations, micro-tags, or micro-operations generated during the decode or other stages of the processor pipeline 1400. The decode circuitry 1440 may be coupled to rename/allocator unit circuitry 1452 in the execution engine circuitry 1450.

The execution engine circuitry 1450 includes the rename/allocator unit circuitry 1452 coupled to retirement unit circuitry 1454 and a set of one or more scheduler(s) circuitry 1456. The scheduler(s) circuitry 1456 represents any number of different schedulers, including reservations stations, central instruction window, etc. In some examples, the scheduler(s) circuitry 1456 can include arithmetic logic unit (ALU) scheduler/scheduling circuitry, ALU queues, address generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1458 includes vector registers unit circuitry, writemask registers unit circuitry, and scalar register unit circuitry. These register units may provide architectural vector registers, vector mask registers, general-purpose registers, etc. The physical register file(s) circuitry 1458 is coupled to the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution unit(s) circuitry 1462 and a set of one or more memory access circuitry 1464. The execution unit(s) circuitry 1462 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1456, physical register file(s) circuitry 1458, and execution cluster(s) 1460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1464). It should also be understood that where separate pipelines are used, one or more of these pipelines may be out-of-order issue/execution and the rest in-order.

In some examples, the execution engine unit circuitry 1450 may perform load store unit (LSU) address/data pipelining to an Advanced Microcontroller Bus (AMB) interface (not shown), and address phase and writeback, data phase load, store, and branches.

The set of memory access circuitry 1464 is coupled to the memory unit circuitry 1470, which includes data TLB circuitry 1472 coupled to data cache circuitry 1474 coupled to level 2 (L2) cache circuitry 1476. In one example, the memory access circuitry 1464 may include load unit circuitry, store address unit circuitry, and store data unit circuitry, each of which is coupled to the data TLB circuitry 1472 in the memory unit circuitry 1470. The instruction cache circuitry 1434 is further coupled to the level 2 (L2) cache circuitry 1476 in the memory unit circuitry 1470. In one example, the instruction cache 1434 and the data cache 1474 are combined into a single instruction and data cache (not shown) in L2 cache circuitry 1476, level 3 (L3) cache circuitry (not shown), and/or main memory. The L2 cache circuitry 1476 is coupled to one or more other levels of cache and eventually to a main memory.

The core 1490 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1490 includes logic to support a packed data instruction set architecture extension (e.g., AVX1, AVX2), thereby allowing the operations used by many multimedia applications to be performed using packed data.

Example Execution Unit(s) Circuitry.

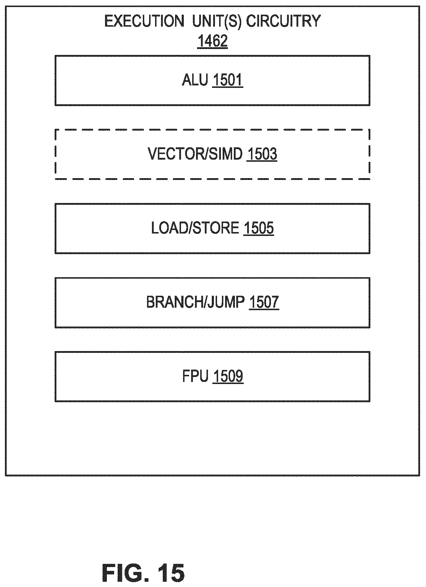

FIG. 15 illustrates examples of execution unit(s) circuitry, such as execution unit(s) circuitry 1462 of FIG. 14(B). As illustrated, execution unit(s) circuity 1462 may include one or more ALU circuits 1501, optional vector/single instruction multiple data (SIMD) circuits 1503, load/store circuits 1505, branch/jump circuits 1507, and/or Floating-point unit (FPU) circuits 1509. ALU circuits 1501 perform integer arithmetic and/or Boolean operations. Vector/SINM circuits 1503 perform vector/SIMD operations on packed data (such as SIMD/vector registers). Load/store circuits 1505 execute load and store instructions to load data from memory into registers or store from registers to memory. Load/store circuits 1505 may also generate addresses. Branch/jump circuits 1507 cause a branch or jump to a memory address depending on the instruction. FPU circuits 1509 perform floating-point arithmetic. The width of the execution unit(s) circuitry 1462 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Example Register Architecture.

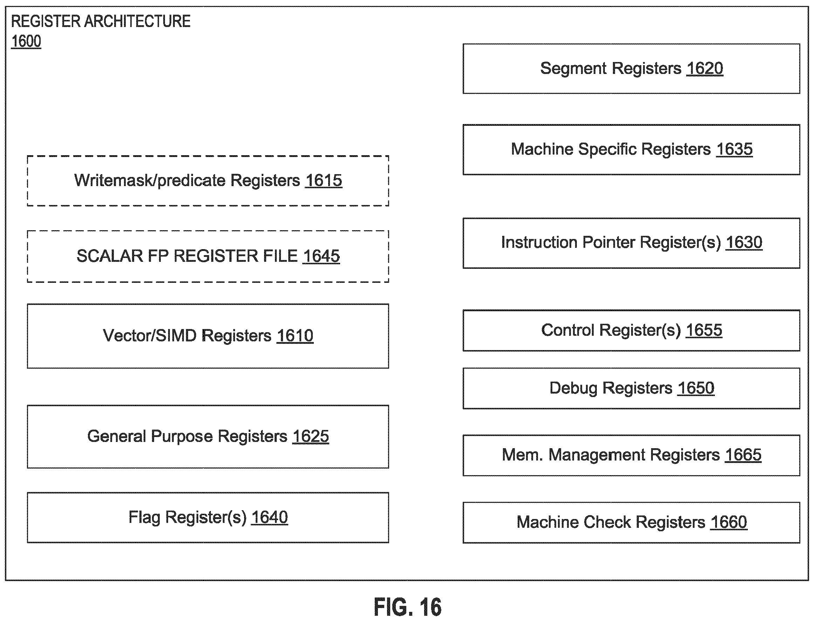

FIG. 16 is a block diagram of a register architecture 1600 according to some examples. As illustrated, the register architecture 1600 includes vector/SIMD registers 1610 that vary from 128-bit to 1,024 bits width. In some examples, the vector/SIMD registers 1610 are physically 512-bits and, depending upon the mapping, only some of the lower bits are used. For example, in some examples, the vector/SIMD registers 1610 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1600 includes writemask/predicate registers 1615. For example, in some examples, there are 8 writemask/predicate registers (sometimes called k0 through k7) that are each 16-bit, 32-bit, 64-bit, or 128-bit in size. Writemask/predicate registers 1615 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1615 corresponds to a data element position of the destination. In other examples, the writemask/predicate registers 1615 are scalable and consists of a set number of enable bits for a given vector element (e.g., 8 enable bits per 64-bit vector element).

The register architecture 1600 includes a plurality of general-purpose registers 1625. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1600 includes scalar floating-point (FP) register file 1645 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1640 (e.g., EFLAGS, RFLAGS, etc.) store status and control information for arithmetic, compare, and system operations. For example, the one or more flag registers 1640 may store condition code information such as carry, parity, auxiliary carry, zero, sign, and overflow. In some examples, the one or more flag registers 1640 are called program status and control registers.

Segment registers 1620 contain segment points for use in accessing memory. In some examples, these registers are referenced by the names CS, DS, SS, ES, FS, and GS.

Machine specific registers (MSRs) 1635 control and report on processor performance. Most MSRs 1635 handle system-related functions and are not accessible to an application program. Machine check registers 1660 consist of control, status, and error reporting MSRs that are used to detect and report on hardware errors.

One or more instruction pointer register(s) 1630 store an instruction pointer value. Control register(s) 1655 (e.g., CR0-CR4) determine the operating mode of a processor (e.g., processor 1270, 1280, 1238, 1215, and/or 1300) and the characteristics of a currently executing task. Debug registers 1650 control and allow for the monitoring of a processor or core's debugging operations.

Memory (mem) management registers 1665 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1600 may, for example, be used in register file / memory 'ISAB08, or physical register file(s) circuitry 14 58.

Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

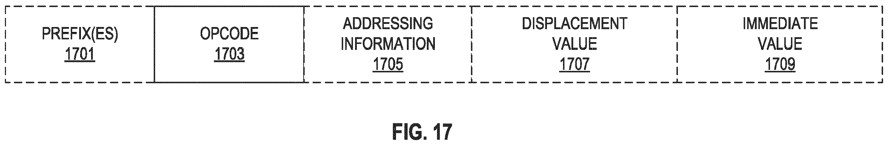

FIG. 17 illustrates examples of an instruction format. As illustrated, an instruction may include multiple components including, but not limited to, one or more fields for: one or more prefixes 1701, an opcode 1703, addressing information 1705 (e.g., register identifiers, memory addressing information, etc.), a displacement value 1707, and/or an immediate value 1709. Note that some instructions utilize some or all the fields of the format whereas others may only use the field for the opcode 1703. In some examples, the order illustrated is the order in which these fields are to be encoded, however, it should be appreciated that in other examples these fields may be encoded in a different order, combined, etc.

The prefix(es) field(s) 1701, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1703 is used to at least partially define the operation to be performed upon a decoding of the instruction. In some examples, a primary opcode encoded in the opcode field 1703 is one, two, or three bytes in length. In other examples, a primary opcode can be a different length. An additional 3-bit opcode field is sometimes encoded in another field.

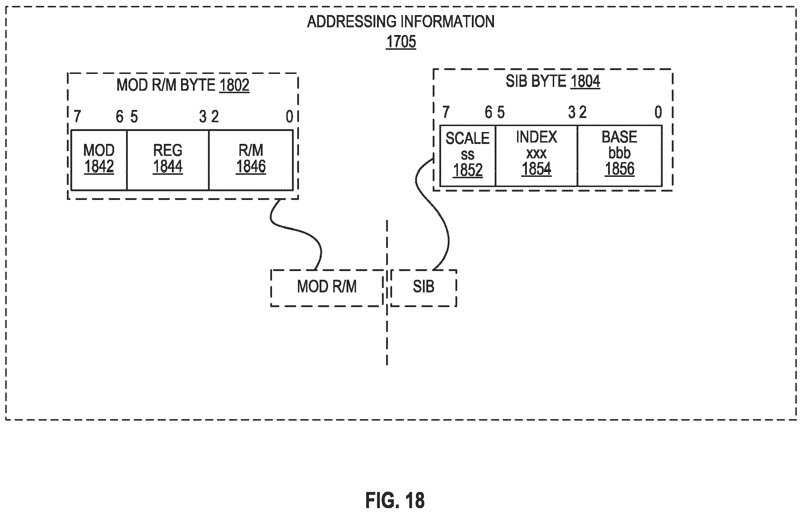

The addressing information field 1705 is used to address one or more operands of the instruction, such as a location in memory or one or more registers. FIG. 18 illustrates examples of the addressing information field 1705. In this illustration, an optional MOD R/M byte 1802 and an optional Scale, Index, Base (SIB) byte 1804 are shown. The MOD R/M byte 1802 and the SIB byte 1804 are used to encode up to two operands of an instruction, each of which is a direct register or effective memory address. Note that both of these fields are optional in that not all instructions include one or more of these fields. The MOD R/M byte 1802 includes a MOD field 1842, a register (reg) field 1844, and R/M field 1846.

The content of the MOD field 1842 distinguishes between memory access and non-memory access modes. In some examples, when the MOD field 1842 has a binary value of 11 (11b), a register-direct addressing mode is utilized, and otherwise a register-indirect addressing mode is used.

The register field 1844 may encode either the destination register operand or a source register operand or may encode an opcode extension and not be used to encode any instruction operand. The content of register field 1844, directly or through address generation, specifies the locations of a source or destination operand (either in a register or in memory). In some examples, the register field 1844 is supplemented with an additional bit from a prefix (e.g., prefix 1701) to allow for greater addressing.

The R/M field 1846 may be used to encode an instruction operand that references a memory address or may be used to encode either the destination register operand or a source register operand. Note the R/M field 1846 may be combined with the MOD field 1842 to dictate an addressing mode in some examples.

The SIB byte 1804 includes a scale field 1852, an index field 1854, and a base field 1856 to be used in the generation of an address. The scale field 1852 indicates a scaling factor. The index field 1854 specifies an index register to use. In some examples, the index field 1854 is supplemented with an additional bit from a prefix (e.g., prefix 1701) to allow for greater addressing. The base field 1856 specifies a base register to use. In some examples, the base field 1856 is supplemented with an additional bit from a prefix (e.g., prefix 1701) to allow for greater addressing. In practice, the content of the scale field 1852 allows for the scaling of the content of the index field 1854 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1707 provides this value. Additionally, in some examples, a displacement factor usage is encoded in the MOD field of the addressing information field 1705 that indicates a compressed displacement scheme for which a displacement value is calculated and stored in the displacement field 1707.

In some examples, the immediate value field 1709 specifies an immediate value for the instruction. An immediate value may be encoded as a 1-byte value, a 2-byte value, a 4-byte value, etc.

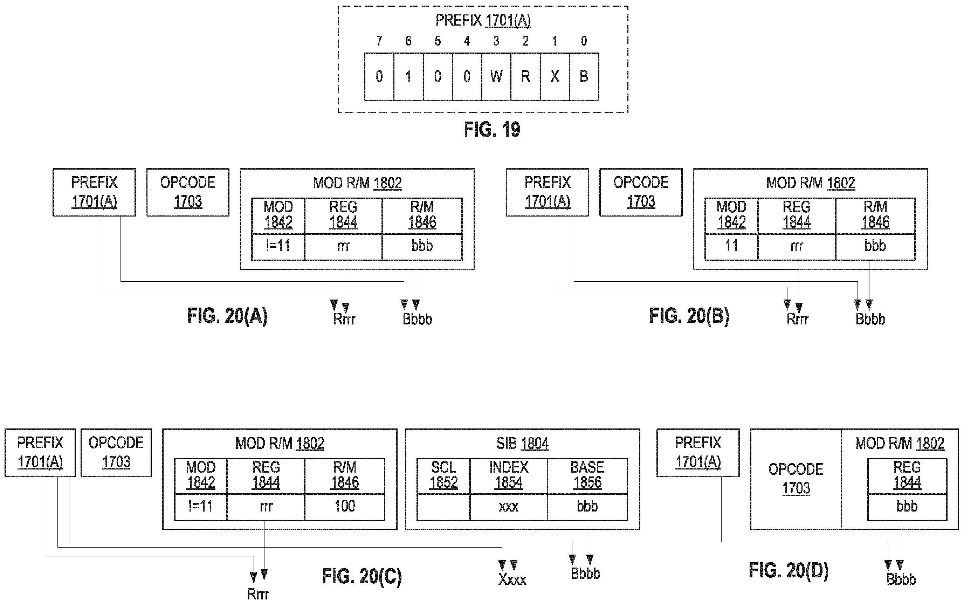

FIG. 19 illustrates examples of a first prefix 1701(A). In some examples, the first prefix 1701(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1701(A) may specify up to three registers using 3-bit fields depending on the format: 1) using the reg field 1844 and the R/M field 1846 of the MOD R/M byte 1802; 2) using the MOD R/M byte 1802 with the SIB byte 1804 including using the reg field 1844 and the base field 1856 and index field 1854; or 3) using the register field of an opcode.

In the first prefix 1701(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (24) registers to be addressed, whereas the MOD R/M reg field 1844 and MOD R/M R/M field 1846 alone can each only address 8 registers.

In the first prefix 1701(A), bit position 2 (R) may be an extension of the MOD R/M reg field 1844 and may be used to modify the MOD R/M reg field 1844 when that field encodes a general-purpose register, a 64-bit packed data register (e.g., a SSE register), or a control or debug register. R is ignored when MOD R/M byte 1802 specifies other registers or defines an extended opcode.

Bit position 1 (X) may modify the SIB byte index field 1854.

Bit position 0 (B) may modify the base in the MOD R/M R/M field 1846 or the SIB byte base field 1856; or it may modify the opcode register field used for accessing general purpose registers (e.g., general purpose registers 1625).

FIGS. 20(A)-(D) illustrate examples of how the R, X, and B fields of the first prefix 1701(A) are used. FIG. 20(A) illustrates R and B from the first prefix 1701(A) being used to extend the reg field 1844 and R/M field 1846 of the MOD R/M byte 1802 when the SIB byte 18 04 is not used for memory addressing. FIG. 20(B) illustrates R and B from the first prefix 1701(A) being used to extend the reg field 1844 and R/M field 1846 of the MOD R/M byte 1802 when the SIB byte 18 04 is not used (register-register addressing). FIG. 20(C) illustrates R, X, and B from the first prefix 1701(A) being used to extend the reg field 1844 of the MOD R/M byte 1802 and the index field 1854 and base field 1856 when the SIB byte 18 04 being used for memory addressing. FIG. 20(D) illustrates B from the first prefix 1701(A) being used to extend the reg field 1844 of the MOD R/M byte 1802 when a register is encoded in the opcode 1703.

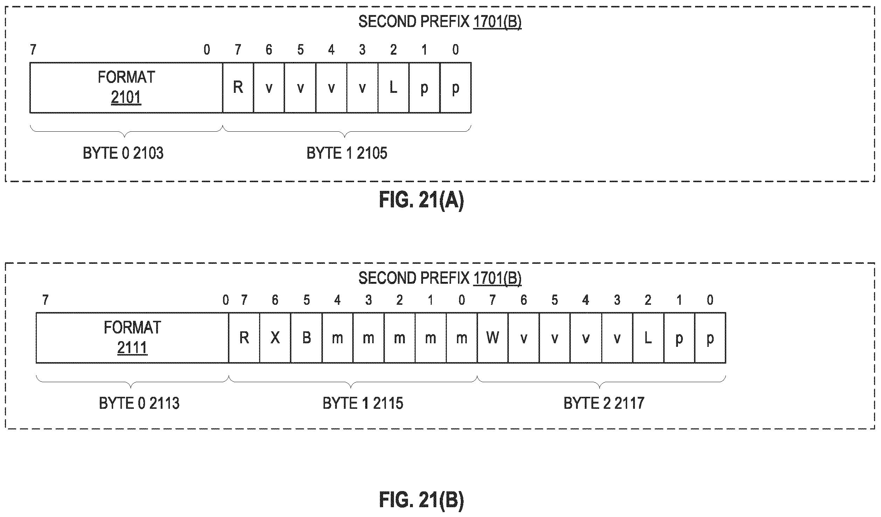

FIGS. 21(A)-(B) illustrate examples of a second prefix 1701(B). In some examples, the second prefix 1701(B) is an example of a VEX prefix. The second prefix 1701(B) encoding allows instructions to have more than two operands, and allows SIMD vector registers (e.g., vector/SIMD registers 1610) to be longer than 64-bits (e.g., 128-bit and 256-bit). The use of the second prefix 1701(B) provides for three-operand (or more) syntax. For example, previous two-operand instructions performed operations such as A = A + B, which overwrites a source operand. The use of the second prefix 1701(B) enables operands to perform nondestructive operations such as A = B + C.

In some examples, the second prefix 1701(B) comes in two forms - a two-byte form and a three-byte form. The two-byte second prefix 1701(B) is used mainly for 128-bit, scalar, and some 256-bit instructions; while the three-byte second prefix 1701(B) provides a compact replacement of the first prefix 1701(A) and 3-byte opcode instructions.

FIG. 21(A) illustrates examples of a two-byte form of the second prefix 1701(B). In one example, a format field 2101 (byte 0 2103) contains the value C5H. In one example, byte 1 2105 includes an "R" value in bit[7]. This value is the complement of the "R" value of the first prefix 1701(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1846 to encode the instruction operand that references a memory address or encode either the destination register operand or a source register operand. Instructions that use this prefix may use the MOD R/M reg field 1844 to encode either the destination register operand or a source register operand, or to be treated as an opcode extension and not used to encode any instruction operand.

For instruction syntax that support four operands, vwv, the MOD R/M R/M field 1846 and the MOD R/M reg field 1844 encode three of the four operands. Bits[7:4] of the immediate value field 1709 are then used to encode the third source register operand.

FIG. 21(B) illustrates examples of a three-byte form of the second prefix 1701(B). In one example, a format field 2111 (byte 0 2113) contains the value C4H. Byte 1 2115 includes in bits[7:5] "R," "X," and "B" which are the complements of the same values of the first prefix 1701(A). Bits[4:0] of byte 1 2115 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2117 is used similar to W of the first prefix 1701(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 11 11b.

Instructions that use this prefix may use the MOD R/M R/M field 1846 to encode the instruction operand that references a memory address or encode either the destination register operand or a source register operand.

Instructions that use this prefix may use the MOD R/M reg field 1844 to encode either the destination register operand or a source register operand, or to be treated as an opcode extension and not used to encode any instruction operand.

For instruction syntax that support four operands, vwv, the MOD R/M R/M field 1846, and the MOD R/M reg field 1844 encode three of the four operands. Bits[7:4] of the immediate value field 1709 are then used to encode the third source register operand.

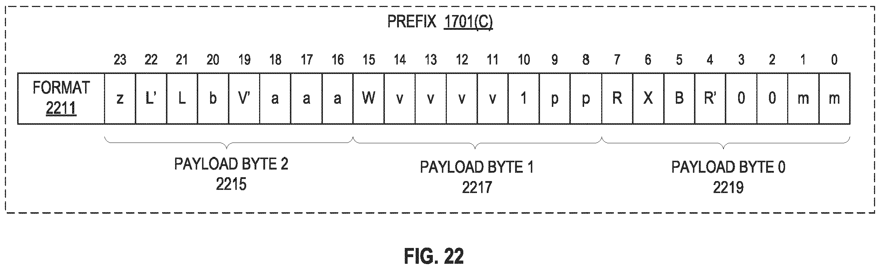

FIG. 22 illustrates examples of a third prefix 1701(C). In some examples, the third prefix 1701(C) is an example of an EVEX prefix. The third prefix 1701(C) is a four-byte prefix.

The third prefix 1701(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 16) or predication utilize this prefix. Opmask register allow for conditional processing or selection control. Opmask instructions, whose source/destination operands are opmask registers and treat the content of an opmask register as a single value, are encoded using the second prefix 1701(B).

The third prefix 1701(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1701(C) is a format field 2211 that has a value, in one example, of 62H. Subsequent bytes are referred to as payload bytes 2215-2219 and collectively form a 24-bit value of P[23:0] providing specific capability in the form of one or more fields (detailed herein).

In some examples, P[1:0] of payload byte 2219 are identical to the low two mm bits. P[3:2] are reserved in some examples. Bit P[4] (R') allows access to the high 16 vector register set when combined with P[7] and the MOD R/M reg field 1844. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1844 and MOD R/M R/M field 1846. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1701(A) and second prefix 1711(B) and may serve as an opcode extension bit or operand size promotion.

P[18:16] specify the index of a register in the opmask (writemask) registers (e.g., writemask/predicate registers 1615). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14: 11] to encode a second source vector register in a nondestructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1701(C) are detailed in the following tables.

Table 1: 32-Register Support in 64-bit Mode

|  | 4 | 3 | [2:0] | REG. TYPE | COMMON USAGES |
|---|---|---|---|---|---|
| REG | R' | R | MOD R/M reg | GPR, Vector | Destination or Source |
| VVVV | V' |  | vvvv | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |

(continued)

|  | 4 | 3 | [2:0] | REG. TYPE | COMMON USAGES |
|---|---|---|---|---|---|
| INDEX | 0 | X | SIB.index | GPR | Memory addressing |
| VIDX | V' | X | SIB.index | Vector | VSIB memory addressing |

Table 2: Encoding Register Specifiers in 32-bit Mode

|  | [2:0] | REG. TYPE | COMMON USAGES |
|---|---|---|---|
| REG | MOD R/M reg | GPR, Vector | Destination or Source |
| VVVV | vvvv | GPR, Vector | 2nd Source or Destination |
| RM | MOD R/M R/M | GPR, Vector | 1st Source or Destination |
| BASE | MOD R/M R/M | GPR | Memory addressing |
| INDEX | SIB.index | GPR | Memory addressing |
| VIDX | SIB.index | Vector | VSIB memory addressing |

Table 3: Opmask Register Specifier Encoding

|  | [2:0] | REG. TYPE | COMMON USAGES |
|---|---|---|---|
| REG | MOD R/M Reg | k0-k7 | Source |
| VVVV | vvvv | k0-k7 | 2nd Source |
| RM | MOD R/M R/M | k0-k7 | 1st Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

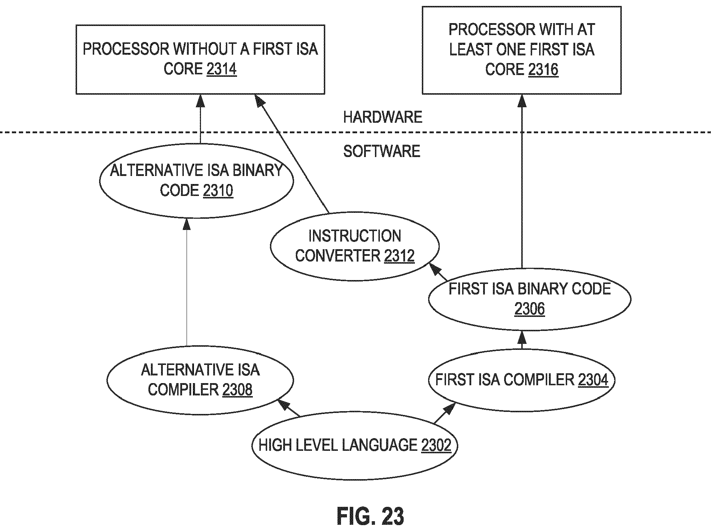

FIG. 23 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 23 shows a program in a high-level language 2302 may be compiled using a first ISA compiler 2304 to generate first ISA binary code 2306 that may be natively executed by a processor with at least one first ISA core 2316. The processor with at least one first ISA core 2316 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2304 represents a compiler that is operable to generate first ISA binary code 2306 (e.g., object code) that can, with or without additional linkage processing, be executed on the processor with at least one first ISA core 2316. Similarly, FIG. 23 shows the program in the high-level language 2302 may be compiled using an alternative ISA compiler 2308 to generate alternative ISA binary code 2310 that may be natively executed by a processor without a first ISA core 2314. The instruction converter 2312 is used to convert the first ISA binary code 2306 into code that may be natively executed by the processor without a first ISA core 2314. This converted code is not necessarily to be the same as the alternative ISA binary code 2310; however, the converted code will accomplish the general operation and be made up of instructions from the alternative ISA. Thus, the instruction converter 2312 represents software, firmware, hardware, or a combination thereof that, through emulation, simulation or any other process, allows a processor or other electronic device that does not have a first ISA processor or core to execute the first ISA binary code 2306.

Components, features, and details described for any of the apparatus and circuitry disclosed herein may optionally apply to any of the methods disclosed herein, which in embodiments may optionally be performed by and/or with such apparatus and circuitry. Any of the apparatus and circuitry described herein in embodiments may optionally be included in any of the systems disclosed herein.

Components and circuitry disclosed herein may be said and/or claimed to be operative, operable, capable, able, configured adapted, or otherwise "to" perform an operation. As used herein, these expressions refer to the characteristics, properties, or attributes of the components when in a powered-off state, and do not imply that the components or the device or apparatus in which they are included is currently powered on or operating. For clarity, it is to be understood that the apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but still co-operate or interact with each other. In the figures, arrows are used to show connections and couplings.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

In the description above, specific details have been set forth to provide a thorough understanding of the embodiments. However, other embodiments may be practiced without some of these specific details. The scope of the invention is not to be determined by the specific examples provided above, but only by the claims below. In other instances, well-known circuits, structures, devices, and operations have been shown in block diagram form and/or without detail to avoid obscuring the understanding of the description. Where considered appropriate, reference numerals, or terminal portions of reference numerals, have been repeated among the figures to indicate corresponding or analogous elements, which may optionally have similar or the same characteristics, unless specified or clearly apparent otherwise.

Reference throughout this specification to "one embodiment," "an embodiment," "one or more embodiments," "some embodiments," for example, indicates that a particular feature may be included in the practice of the invention but is not necessarily required to be. Similarly, in the description various features are sometimes grouped together in a single embodiment, Figure, or description thereof for the purpose of streamlining the disclosure and aiding in the understanding of various inventive aspects. This method of disclosure, however, is not to be interpreted as reflecting an intention that the invention requires more features than are expressly recited in each claim. Rather, as the following claims reflect, inventive aspects lie in less than all features of a single disclosed embodiment. Thus, the claims following the Detailed Description are hereby expressly incorporated into this Detailed Description, with each claim standing on its own as a separate embodiment of the invention.

EXAMPLE EMBODIMENTS

The following examples pertain to further embodiments. Specifics in the examples may be used anywhere in one or more embodiments.

Example 1 is an apparatus including a substitution box (S-box) circuitry. The S-box circuitry includes multiplicative inverse circuitry to receive an 8-bit input in Galois field, and is to generate a corresponding 8-bit output in Galois field. The 8-bit output is such that when there has been no error in the generation of the 8-bit output, the 8-bit output is to be a multiplicative inverse of the 8-bit input. The apparatus also includes error detection circuitry to receive the 8-bit input and coupled with the S-box circuitry to receive the 8-bit output. The error detection circuitry is to detect whether an error has occurred in the generation of the 8-bit output based at least in part on whether the 8-bit output is the multiplicative inverse of the 8-bit input.

Example 2 includes the apparatus of Example 1, in which the error detection circuitry includes a Galois field multiplier to multiply the 8-bit input and the 8-bit output to generate a product, and optionally comparison circuitry to compare the product with an 8-bit value of one. The error detection circuitry is optionally to determine that the error has occurred in the generation of the 8-bit output when the product does not equal the 8-bit value of one.

Example 3 includes the apparatus of Example 2, in which the Galois field multiplier is one of a one-term 8-bit Galois field multiplier, a two-term 4-bit Galois field multiplier, and a four-term 2-bit Galois field multiplier.

Example 4 includes the apparatus of Example 1, in which the error detection circuitry includes circuitry to generate a value equal to a sum of: (1) a most significant 4-bit nibble of a product of the 8-bit input and the 8-bit output; and (2) a least significant 4-bit nibble of the product. The error detection circuitry also optionally includes comparison circuitry to compare the value with a 4-bit value of one. The error detection circuitry is optionally to determine that the error has occurred in the generation of the 8-bit output when the value equal to the sum does not equal the 4-bit value of one.

Example 5 includes the apparatus of any one of Examples 1 to 4, in which the error detection circuitry is to output an error signal indicative of whether the error has occurred in the generation of the 8-bit output.

Example 6 includes the apparatus of Example 5, further comprising a storage to store the error signal and fifteen additional error signals to be concurrently output from fifteen additional error detection circuitries each corresponding to a different one of fifteen additional 8-bit inputs that together with the 8-bit input represent a 128-bit input data to a cryptographic round. Also optionally further comprising the error signal combination circuitry coupled with storage to combine the error signal and the fifteen additional error signals. Optionally in which the error signal combination circuitry is to combine the error signal and the fifteen additional error signals in a subsequent clock cycle to a clock cycle in which a 128-bit output data is generated for the cryptographic round.

Example 7 includes the apparatus of any one of Examples 1 to 6, further including cryptographic round circuitry, including the S-box circuitry, the cryptographic round circuitry to receive 128-bit input data for a cryptographic round and to output 128-bit output data for the cryptographic round. Optionally, the cryptographic round circuitry may have a greater latency from receipt of the 128-bit input data to output of the 128-bit output data than any latency of the error detection circuitry during a same clock cycle.

Example 8 includes the apparatus of any one of Examples 1 to 7, further including circuitry to check whether the 8-bit input is zero.

Example 9 includes the apparatus of any one of Examples 1 to 8, further including Advanced Encryption Standard (AES) circuitry including the S-box circuitry.

Example 10 includes the apparatus of any one of Examples 1 to 8, further including SMS4 circuitry including the S-box circuitry.

Example 11 is a method including performing substitution box (S-box) operations on an 8-bit input in Galois field to generate a corresponding 8-bit output in Galois field. When there has been no error in the generation of the 8-bit output, the 8-bit output is to be a multiplicative inverse of the 8-bit input. The method also includes detecting whether an error occurred in the generation of the 8-bit output based at least in part on whether the 8-bit output is the multiplicative inverse of the 8-bit input.

Example 12 includes the method of Example 11, in which detecting whether the error occurred includes generating a product by multiplying the 8-bit input and the 8-bit output, and comparing the product with an 8-bit value of one. Also optionally determining that the error occurred in the generation of the 8-bit output when the product does not equal the 8-bit value of one.

Example 13 includes the method of Example 11, in which detecting whether the error occurred includes generating a value equal to a sum of: (1) a most significant 4-bit nibble of a product of the 8-bit input and the 8-bit output; and (2) a least significant 4-bit nibble of the product, and comparing the value with a 4-bit value of one. Also optionally determining that the error occurred in the generation of the 8-bit output when the value equal to the sum does not equal the 4-bit value of one.

Example 14 includes the method of any one of Examples 11 to 13, further including outputting an error signal indicating whether the error occurred in the generation of the 8-bit output.

Example 15 includes the method of Example 14, further including storing the error signal and fifteen additional error signals corresponding to fifteen additional sets of S-box operations respectively performed on different ones of fifteen additional 8-bit inputs that together with the 8-bit input represent a 128-bit input data to a cryptographic round. Also optionally further including combining the error signal and the fifteen additional error signals in a subsequent clock cycle to a clock cycle in which a 128-bit output data is generated from the 128-bit input data for the cryptographic round.

Example 16 is a system including a processor, a memory, and a cryptographic unit coupled with the processor and coupled with the memory. The cryptographic unit is to encrypt data sent from the processor to the memory. The cryptographic unit includes a substitution box (S-box) circuitry, including multiplicative inverse circuitry to receive an 8-bit input in Galois field, and to generate a corresponding 8-bit output in Galois field. When there has been no error in the generation of the 8-bit output, the 8-bit output is to be a multiplicative inverse of the 8-bit input. The cryptographic unit also includes error detection circuitry to receive the 8-bit input and coupled with the S-box circuitry to receive the 8-bit output. The error detection circuitry is to detect whether an error has occurred in the generation of the 8-bit output based at least in part on whether the 8-bit output is the multiplicative inverse of the 8-bit input.

Example 17 includes the system of Example 16, in which the error detection circuitry includes a Galois field multiplier to multiply the 8-bit input and the 8-bit output to generate a product, and comparison circuitry to compare the product with an 8-bit value of one. Optionally where the error detection circuitry is to determine that the error has occurred in the generation of the 8-bit output when the product does not equal the 8-bit value of one.

Example 18 includes the system of Example 16, in which the error detection circuitry includes circuitry to generate a value equal to a sum of: (1) a most significant 4-bit nibble of a product of the 8-bit input and the 8-bit output; and (2) a least significant 4-bit nibble of the product, and comparison circuitry to compare the value with a 4-bit value of one. Optionally where the error detection circuitry is to determine that the error has occurred in the generation of the 8-bit output when the value does not equal the 4-bit value of one.

Example 19 includes the system of any one of Examples 16 to 18, in which the error detection circuitry is to output an error signal indicative of whether the error has occurred in the generation of the 8-bit output.

Example 20 includes the system of any one of Examples 16 to 19, in which the cryptographic unit further includes cryptographic round circuitry, including the S-box circuitry. The cryptographic round circuitry is to receive 128-bit input data for a cryptographic round and to output 128-bit output data for the cryptographic round. Optionally in which the cryptographic round circuitry is to have a greater latency from receipt of the 128-bit input data to output of the 128-bit output data than any latency of the error detection circuitry during a same clock cycle.

Example 21 is a processor or other apparatus operative to perform the method of any one of Examples 11 to 15.

Example 22 is a processor or other apparatus that includes means for performing the method of any one of Examples 11 to 15.

Example 23 is a processor or other apparatus that includes circuitry to perform the method of any one of Examples 11 to 15.

**Claims**

1. An apparatus comprising:

   a substitution box (S-box) circuitry, including multiplicative inverse circuitry to receive an 8-bit input in Galois field, and to generate a corresponding 8-bit output in Galois field, wherein, when there has been no error in the generation of the 8-bit output, the 8-bit output is to be a multiplicative inverse of the 8-bit input; and
   error detection circuitry to receive the 8-bit input and coupled with the S-box circuitry to receive the 8-bit output, the error detection circuitry to detect whether an error has occurred in the generation of the 8-bit output based at least in part on whether the 8-bit output is the multiplicative inverse of the 8-bit input.

2. The apparatus of claim 1, wherein the error detection circuitry comprises:

a Galois field multiplier to multiply the 8-bit input and the 8-bit output to generate a product; and
comparison circuitry to compare the product with an 8-bit value of one, wherein the error detection circuitry is to determine that the error has occurred in the generation of the 8-bit output when the product does not equal the 8-bit value of one.

3. The apparatus of claim 2, wherein the Galois field multiplier is one of a one-term 8-bit Galois field multiplier, a two-term 4-bit Galois field multiplier, and a four-term 2-bit Galois field multiplier.

4. The apparatus of claim 1, wherein the error detection circuitry comprises:

circuitry to generate a value equal to a sum of: (1) a most significant 4-bit nibble of a product of the 8-bit input and the 8-bit output; and (2) a least significant 4-bit nibble of the product; and
comparison circuitry to compare the value with a 4-bit value of one, wherein the error detection circuitry is to determine that the error has occurred in the generation of the 8-bit output when the value equal to the sum does not equal the 4-bit value of one.

5. The apparatus of any one of claims 1 to 4, wherein the error detection circuitry is to output an error signal indicative of whether the error has occurred in the generation of the 8-bit output.

6. The apparatus of claim 5, further comprising:

a storage to store the error signal and fifteen additional error signals to be concurrently output from fifteen additional error detection circuitries each corresponding to a different one of fifteen additional 8-bit inputs that together with the 8-bit input represent a 128-bit input data to a cryptographic round; and
error signal combination circuitry coupled with storage to combine the error signal and the fifteen additional error signals, wherein the error signal combination circuitry is to combine the error signal and the fifteen additional error signals in a subsequent clock cycle to a clock cycle in which a 128-bit output data is generated for the cryptographic round.

7. The apparatus of any one of claims 1 to 6, further comprising cryptographic round circuitry, including the S-box circuitry, the cryptographic round circuitry to receive 128-bit input data for a cryptographic round and to output 128-bit output data for the cryptographic round, wherein the cryptographic round circuitry is to have a greater latency from receipt of the 128-bit input data to output of the 128-bit output data than any latency of the error detection circuitry during a same clock cycle.

8. The apparatus of any one of claims 1 to 7, further comprising circuitry to check whether the 8-bit input is zero.

9. The apparatus of any one of claims 1 to 8, further comprising Advanced Encryption Standard (AES) circuitry including the S-box circuitry.

10. The apparatus of any one of claims 1 to 8, further comprising SMS4 circuitry including the S-box circuitry.

11. A method comprising:

performing substitution box (S-box) operations on an 8-bit input in Galois field to generate a corresponding 8-bit output in Galois field, wherein, when there has been no error in the generation of the 8-bit output, the 8-bit output is to be a multiplicative inverse of the 8-bit input; and
detecting whether an error occurred in the generation of the 8-bit output based at least in part on whether the 8-bit output is the multiplicative inverse of the 8-bit input.

12. The method of claim 11, wherein detecting whether the error occurred comprises:

generating a product by multiplying the 8-bit input and the 8-bit output; and
comparing the product with an 8-bit value of one; and
determining that the error occurred in the generation of the 8-bit output when the product does not equal the 8-bit value of one.

13. The method of claim 11, wherein detecting whether the error occurred comprises:

generating a value equal to a sum of: (1) a most significant 4-bit nibble of a product of the 8-bit input and the 8-bit output; and (2) a least significant 4-bit nibble of the product; and

comparing the value with a 4-bit value of one; and

determining that the error occurred in the generation of the 8-bit output when the value equal to the sum does not equal the 4-bit value of one.

14. An apparatus comprising means for performing the method of any one of claims 11 to 13.

15. A computer program comprising instructions that when executed by a computer cause the computer to carry out the method as claimed in any one of claims 11 to 13.

AES UNIT
100

DATA ← 106

ADD ROUND KEY
CIRCUITRY
102

ROUND KEY ← 107

S-BOX CIRCUITRY
103

ERROR
DETECTION
CIRCUITRY
101

108

SHIFT ROWS
CIRCUITRY
104

ERROR
SIGNAL ← 112

MIX COLUMNS
CIRCUITRY
105

ENCRYPTED DATA ← 109

**FIG. 1**

S-BOX CIRCUITRY
203

S-BOX $_{IN}$ [ 7:0 ]

$b_h$  $b_l$

$\alpha$

$X^2{*}\beta$

MULTIPLICATIVE
INVERSE CIRCUITRY
210

$GF(2^4)\ X^{-1}$

$a_h$  $a_l$

AFFINE
TRANSFORM
CIRCUITRY
211

S-BOX$_{OUT}$[7:0]

**FIG. 2**

25

S-BOX $_{IN}$ [ 7:0 ]

S-BOX CIRCUITRY
303

MULTIPLICATIVE
INVERSE
CIRCUITRY
310

ERROR
DETECTION
CIRCUITRY
301

320

AFFINE
TRANFORM
CIRCUITRY
311

ERROR SIGNAL
312

S-BOX$_{OUT}$[7:0]

## FIG. 3

S-BOX $_{IN}$ [ 7:0 ]

S-BOX CIRCUITRY
403

401

MULTIPLICATIVE
INVERSE CIRCUITRY
410

ERROR DETECTION
CIRCUITRY

421

GALOIS-FIELD
MULTIPLIER

420

411

AFFINE TRANSFORM
CIRCUITRY

422

COMPARISON
CIRCUITRY

ERROR
SIGNAL
412

S-BOX$_{OUT}$[7:0]

## FIG. 4

S-BOX IN [7:0]

ERROR DETECTION
CIRCUITRY
501

MULTIPLICATIVE
INVERSE CHECKER
CIRCUITRY
523

S-BOX
CIRCUITRY
503

510

$b_h$ $b_l$

MULTIPLICATIVE
INVERSE
CIRCUITRY

$b_h$ $b_l$ $b_h$ $b_l$

0×9

520

$a_h$ $a_l$

$a_h$ $a_l$

511

AFFINE
TRANSFORM
CIRCUITRY

524

COMPARISON
CIRCUITRY

S-BOX$_{OUT}$[7:0]

ERROR
SIGNAL
512

## FIG. 5

S-BOX IN [7:0]

FIRST S-BOX PORTION
630-1

16

SIXTEENTH
S-BOX PORTION
630-16

S-BOX
CIRCUITRY
603

ERROR
DETECTION
CIRCUITRY
601

ERROR
SIGNAL
612

631

ERROR SIGNAL
COMBINATION
CIRCUITRY

632

COMBINED
ERROR
SIGNAL

S-BOX$_{OUT}$[7:0]

## FIG. 6

**FIG. 7**

EP 4 439 532 A1

S-BOX<sub>IN</sub> [7:0]

S-BOX PORTION 830-1

16

S-BOX CIRCUITRY 803

810
MULTIPLICATIVE INVERSE CIRCUITRY

811
AFFINE TRANSFORM CIRCUITRY

801
ERROR DETECTION CIRCUITRY

S-BOX<sub>OUT</sub>[7:0]

805
MIX COL. CIRCUITRY

KEY PARITY  802

837
PREDICTED PARITY CIRCUITRY

812 ERROR SIGNAL

KEY ADDITION CIRCUITRY

ROUND KEY

845
STORAGE

809
DATA

840
PREDICTED PARITY BIT

847
ERROR SIGNALS

838
COMPUTED PARITY CIRCUITRY

COMPARISON CIRCUITRY

839

846

ERROR SIGNAL COMBINATION CIRCUITRY

831

COMBINED ROUND ERROR SIGNAL

832

FIG. 8

29

SYSTEM
985

986 ─┐

PROCESSOR

DATA
990

987

MEMORY CONTROLLER

AES
CRYPTOGRAPHIC
UNIT
900

ENCRYPTED
DATA
991

988 ─┐

MEMORY

901 ─┐

ERROR DETECTION
CIRCUITRY

912
ERROR SIGNAL

# FIG. 9

1086

PROCESSOR

AES INSTRUCTION ─◄─ 1087

1088 ─┐

DECODE
UNIT

1000 ─┐

AES
CRYPTOGRAPHIC
UNIT

1089 ─┐

REGISTERS

1090 ─┐

DATA

1091 ─┐

ENCRYPTED
DATA

1001 ─┐

ERROR
DETECTION
CIRCUITRY

1012
ERROR
SIGNAL

# FIG. 10

1186

PROCESSOR

S-BOX
INATRUCTION ← 1187

1188

DECODE
UNIT

1103

S-BOX
UNIT

1189
REGISTERS

1190

DATA

1191

ENCRYPTED
DATA

1101

ERROR
DETECTION
CIRCUITRY

1112
ERROR
SIGNAL

# FIG. 11

MEMORY 1234

PROCESSOR/ COPROCESSOR

IMC 1282

1280

1286

1288

1254

1298

1250

1278

1276

1252
1294

1270

IMC 1272

NW I/F 1290

1296

1292

MEMORY 1232

1200

COPROCESSOR 1238

1216

PCU 1217

PROCESSOR 1215

AUDIO I/O 1224

1220

I/O DEVICES 1214

COMM DEVICES 1227

BUS BRIDGE 1218

KEYBOARD/ MOUSE 1222

STORAGE

CODE & DATA 1228

1230

**FIG. 12**

PROCESSOR OR
SOC 1300

| SPECIAL PURPOSE LOGIC 1308 | CORE 1302(A) | | CORE 1302(N) | SYSTEM AGENT UNIT 1310 |
|---|---|---|---|---|
| | CACHE UNIT(S) 1304(A) | - - - | CACHE UNIT(S) 1304(N) | INTEGRATED MEMORY CONTROLLER UNIT(S) 1314 |
| | SHARED CACHE UNIT(S) 1306 | | | |
| | INTERFACE NETWORK 1312 | | | |

INTERFACE CONTROLLER UNIT(S) 1316

OTHER DEVICE(S) 1318

**FIG. 13**

FIG. 14(A)

CORE 1490

**FRONT-END UNIT 1430**

| BRANCH PREDICTION 1432 | → | INSTRUCTION CACHE 1434 |
| | | INSTRUCTION TLB 1436 |

INSTRUCTION FETCH 1438

DECODE CIRCUITRY 1440

**EXECUTION ENGINE UNIT 1450**

RENAME / ALLOCATOR UNIT 1452

RETIREMENT UNIT 1454 ↔ SCHEDULER(S) 1456

PHYSICAL REGISTER FILE(S) 1458

**EXECUTION CLUSTER(S) 1460**

EXECUTION UNIT(S) CIRCUITRY 1462

MEMORY ACCESS CIRCUITRY 1464

**MEMORY UNIT 1470**

DATA TLB 1472

DATA CACHE 1474

L2 CACHE 1476

**FIG. 14(B)**

EXECUTION UNIT(S) CIRCUITRY
1462

ALU 1501

VECTOR/SIMD 1503

LOAD/STORE 1505

BRANCH/JUMP 1507

FPU 1509

**FIG. 15**

EP 4 439 532 A1

REGISTER ARCHITECTURE
1600

Segment Registers 1620

Machine Specific Registers 1635

Writemask/predicate Registers 1615

Instruction Pointer Register(s) 1630

SCALAR FP REGISTER FILE 1645

Vector/SIMD Registers 1610

Control Register(s) 1655

Debug Registers 1650

General Purpose Registers 1625

Mem. Management Registers 1665

Flag Register(s) 1640

Machine Check Registers 1660

FIG. 16

| PREFIX(ES) 1701 | OPCODE 1703 | ADDRESSING INFORMATION 1705 | DISPLACEMENT VALUE 1707 | IMMEDIATE VALUE 1709 |
|---|---|---|---|---|

FIG. 17

EP 4 439 532 A1

ADDRESSING INFORMATION
1705

MOD R/M BYTE 1802

| 7 | 6 5 | 3 2 | 0 |
|---|---|---|---|
| MOD 1842 | REG 1844 | R/M 1846 | |

SIB BYTE 1804

| 7 | 6 5 | 3 2 | 0 |
|---|---|---|---|
| SCALE ss 1852 | INDEX xxx 1854 | BASE bbb 1856 | |

MOD R/M

SIB

FIG. 18

FIG. 19

FIG. 20(A)

FIG. 20(B)

FIG. 20(C)

FIG. 20(D)

EP 4 439 532 A1

| 7 | | 0 | 7 | 6 | 5 | 4 | 3 | 2 | 1 | 0 |
|---|---|---|---|---|---|---|---|---|---|---|
| FORMAT 2101 | | | R | v | v | v | v | L | p | p |

BYTE 0 2103 — BYTE 1 2105

SECOND PREFIX 1701(B)

**FIG. 21(A)**

| 7 | | 0 | 7 | 6 | 5 | 4 | 3 | 2 | 1 | 0 | 7 | 6 | 5 | 4 | 3 | 2 | 1 | 0 |
|---|---|---|---|---|---|---|---|---|---|---|---|---|---|---|---|---|---|---|
| FORMAT 2111 | | | R | X | B | m | m | m | m | m | W | v | v | v | v | L | p | p |

BYTE 0 2113 — BYTE 1 2115 — BYTE 2 2117

SECOND PREFIX 1701(B)

**FIG. 21(B)**

FIG. 22

PROCESSOR WITHOUT A FIRST ISA
CORE 2314

PROCESSOR WITH AT
LEAST ONE FIRST ISA
CORE 2316

HARDWARE

SOFTWARE

ALTERNATIVE ISA BINARY
CODE 2310

INSTRUCTION
CONVERTER 2312

FIRST ISA BINARY CODE
2306

ALTERNATIVE ISA
COMPILER 2308

FIRST ISA COMPILER 2304

HIGH LEVEL LANGUAGE 2302

FIG. 23

**EUROPEAN SEARCH REPORT**

Application Number

EP 23 21 3568

## DOCUMENTS CONSIDERED TO BE RELEVANT

| Category | Citation of document with indication, where appropriate, of relevant passages | Relevant to claim |
|---|---|---|
| X | KUMAR RAGHAVAN ET AL: "15.5 A 100Gbps Fault-Injection Attack Resistant AES-256 Engine with 99.1-to-99.99% Error Coverage in Intel 4 CMOS", 2023 IEEE INTERNATIONAL SOLID- STATE CIRCUITS CONFERENCE (ISSCC), IEEE, 19 February 2023 (2023-02-19), pages 1-3, XP034314013, DOI: 10.1109/ISSCC42615.2023.10067715 [retrieved on 2023-03-23] * the whole document * | 1-15 |
| X | Mark Karpovsky ET AL: "DIFFERENTIAL FAULT ANALYSIS ATTACK RESISTANT ARCHITECTURES FOR THE ADVANCED ENCRYPTION STANDARD", IFIP International Federation for Information Processing, 27 August 2004 (2004-08-27), XP055011516, DOI: 10.1007/1-4020-8147-2_12 Retrieved from the Internet: URL:10.1007/1-4020-8147-2_12 [retrieved on 2011-11-08] | 1,11,14, 15 |
| A | * page 3 - page 4 * | 2-10,12, 13 |
| X | US 2016/344541 A1 (DUPLYS PAULIUS [DE] ET AL) 24 November 2016 (2016-11-24) | 1,11,14, 15 |
| A | * paragraph [0006] - paragraph [0009] * * paragraph [0022] - paragraph [0034] * * figures 1-3 * | 2-10,12, 13 |

-/--

**CLASSIFICATION OF THE APPLICATION (IPC)**

INV.
G09C1/00
H04L9/00
H04L9/06

**TECHNICAL FIELDS SEARCHED (IPC)**

G09C
H04L

The present search report has been drawn up for all claims

| Place of search | Date of completion of the search | Examiner |
|---|---|---|
| Munich | 8 May 2024 | Apostolescu, Radu |

EPO FORM 1503 03.82 (P04C01)

Europäisches
Patentamt

European
Patent Office

Office européen
des brevets

# EUROPEAN SEARCH REPORT

**Application Number**

EP 23 21 3568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | KUMAR RAGHAVAN ET AL: "A 7-Gbps SCA-Resistant Multiplicative-Masked AES Engine in Intel 4 CMOS", IEEE JOURNAL OF SOLID-STATE CIRCUITS, IEEE, USA, vol. 58, no. 4, 1 April 2023 (2023-04-01), pages 1106-1116, XP011937454, ISSN: 0018-9200, DOI: 10.1109/JSSC.2022.3230372 [retrieved on 2022-12-28] * page 1107 – page 1112 * | 1-15 | |
| A | MEHRAN MOZAFFARI-KERMANI: "Fault Detection Structures of the S-boxes and the Inverse S-boxes for the Advanced Encryption Standard", JOURNAL OF ELECTRONIC TESTING., vol. 25, no. 4-5, 17 July 2009 (2009-07-17), pages 225-245, XP093160380, NL ISSN: 0923-8174, DOI: 10.1007/s10836-009-5108-4 Retrieved from the Internet: URL:https://cse.usf.edu/~mehran2/Papers/J1.pdf> * page 227 – page 243 * | 1-15 | **TECHNICAL FIELDS SEARCHED (IPC)** |
| A | US 2004/184602 A1 (NADEHARA KOUHEI [JP]) 23 September 2004 (2004-09-23) * paragraph [0047] – paragraph [0049] * * paragraph [0135] – paragraph [0154] * | 1-15 | |

The present search report has been drawn up for all claims

| Place of search | Date of completion of the search | Examiner |
|---|---|---|
| Munich | 8 May 2024 | Apostolescu, Radu |

EPO FORM 1503 03.82 (P04C01)

## ANNEX TO THE EUROPEAN SEARCH REPORT
## ON EUROPEAN PATENT APPLICATION NO.

EP 23 21 3568

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | | Publication date | Patent family member(s) | | Publication date |
|---|---|---|---|---|---|
| US 2016344541 | A1 | 24-11-2016 | DE 102015209120 | A1 | 24-11-2016 |
| | | | US 2016344541 | A1 | 24-11-2016 |
| US 2004184602 | A1 | 23-09-2004 | JP 3818263 | B2 | 06-09-2006 |
| | | | JP 2004233427 | A | 19-08-2004 |
| | | | US 2004184602 | A1 | 23-09-2004 |

EPO FORM P0459

For more details about this annex : see Official Journal of the European Patent Office, No. 12/82